# EUROPEAN PATENT SPECIFICATION

(11) **EP 4 510 018 B1**
(45) Date of publication and mention of the grant of the patent: **13.05.2026**
(21) Application number: 24194487.5
(22) Date of filing: 14.08.2024
(51) Int. Cl.: G06F 21/10

(54) **PROGRAM, INFORMATION PROCESSING APPARATUS, AND METHOD FOR CONTROLLING INFORMATION PROCESSING APPARATUS**
PROGRAMM, INFORMATIONSVERARBEITUNGSVORRICHTUNG UND VERFAHREN ZUR STEUERUNG DER INFORMATIONSVERARBEITUNGSVORRICHTUNG
PROGRAMME, APPAREIL DE TRAITEMENT D'INFORMATIONS ET PROCÉDÉ DE COMMANDE D'APPAREIL DE TRAITEMENT D'INFORMATIONS

(30) Priority: 16.08.2023 JP 2023132657; 16.08.2023 JP 2023132656; 16.08.2023 JP 2023132655
(43) Date of publication of application: 19.02.2025
(73) Proprietor: CANON KABUSHIKI KAISHA, Tokyo 146-8501 (JP)
(72) Inventor: TAKABA, Ryo, Tokyo, 146-8501 (JP); MATSUMOTO, Yu, Tokyo, 146-8501 (JP)
(74) Representative: TBK

(56) References cited:
- EP-A1- 1 589 446
- JP-A- 2020 510 924
- US-A1- 2013 275 807

## Description

### BACKGROUND OF THE INVENTION

### Field of the Invention

The present invention relates to a program, an information processing apparatus, and a method for controlling an information processing apparatus.

### Description of the Related Art

A user sets up a purchased printing apparatus (hereinafter referred to as a printer) so that it can be used from an information processing apparatus such as a PC. The user uses a setup application (hereinafter, referred to as a setup app) to perform a setup of the printer, which includes a network connection of the printer, installation of a driver on the information processing apparatus, and acquisition of a license for using the printer for various Web services, and the like. The user can perform printing, scanning, and the like using a portal application (hereinafter, referred to as a portal app) that provides printer functions such as printing and scanning after setting up the printer. Japanese Patent Laid-Open No. 2018-191252 describes a method for connecting a printer to a network when the printer is set up US2013/275807A1, EP1589446A1 and JP2020510924A have been used to draw up the European search report and examine the European patent application.

In a case where a user uses a portal app before setting up a printer in a setup app, a function of the printer cannot be used from the portal app because preparations for use of the printer from the information processing apparatus have not been completed. Accordingly, there is a demand that a printer setup function be provided in a portal app. One method for providing a setup function in a portal app is a method in which the portal app downloads and activates an existing setup app. This method has the advantage that a setup function can be easily added to the portal app compared to a method of newly implementing the setup function in the portal app.

### SUMMARY OF THE INVENTION

The present invention provides improved convenience even when a first application and a second application can operate as independent applications.

The present invention in first aspect provides a program as specified in claims 1 to 13.

The present invention in its second aspect provides an information processing apparatus as specified in claim 14.

The present invention in its third aspect provides a method for controlling an information processing apparatus as specified in claim 15.

The present invention can improve convenience even when a first application and a second application can operate as independent applications.

Further features of the present invention will become apparent from the following description of exemplary embodiments with reference to the attached drawings.

### BRIEF DESCRIPTION OF THE DRAWINGS

FIG. 1 is a configuration diagram of an information processing system.
FIG. 2 is a flowchart illustrating processing executed by an information processing apparatus.
FIG. 3 is a flowchart illustrating processing executed by the information processing apparatus.
FIG. 4 is a flowchart illustrating processing executed by the information processing apparatus.
FIG. 5 is a flowchart illustrating processing executed by the information processing apparatus.
FIG. 6 is a flowchart illustrating processing executed by the information processing apparatus.
FIG. 7 is a flowchart illustrating processing executed by the information processing apparatus.
FIG. 8 is a flowchart illustrating processing executed by the information processing apparatus.
FIG. 9 is a diagram illustrating a software license acquisition screen.
FIG. 10 is view illustrating printer selection screen.
FIG. 11 is view illustrating an interface selection screen.
FIGS. 12A and 12B are diagrams illustrating a setup completion screen.
FIG. 13 is a diagram illustrating an incompatible model detection screen.
FIG. 14 is view illustrating a printer usage screen.
FIGS. 15A and 15B are diagrams illustrating a setup failure notification screen.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Since a first application and a second application can operate as independent applications, there is a need to achieve an improvement in convenience.

By virtue of the present invention, convenience is improved even when a first application and a second application can operate as independent applications.

### <First Embodiment>

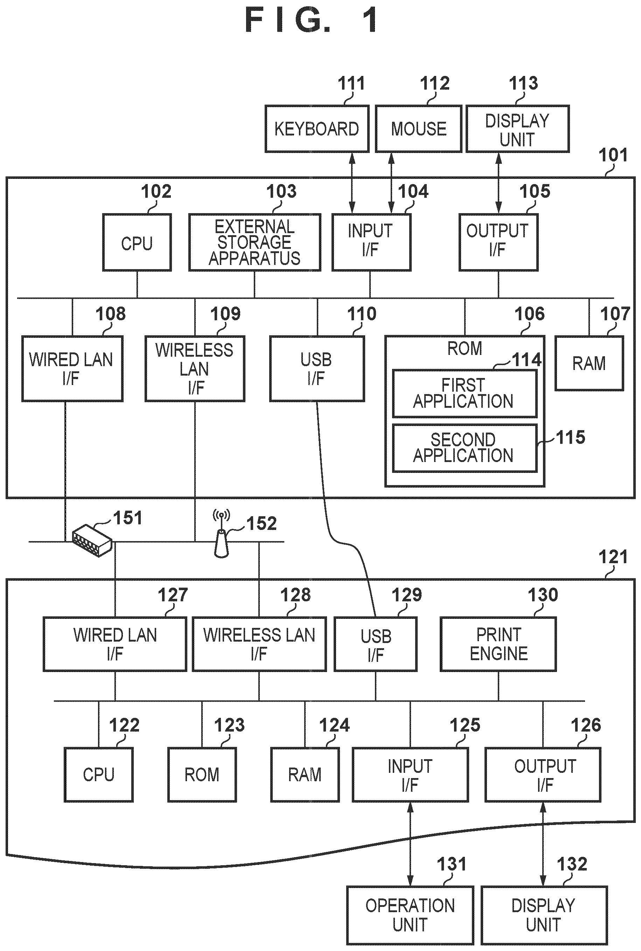

FIG. 1 is a diagram illustrating an example of a configuration of an information processing system according to the present embodiment. In the present embodiment, an information processing apparatus 101 is described with the example of a PC, but the invention is not limited thereto. The information processing apparatus 101 may be, for example, a smartphone, a tablet, or the like. The information processing apparatus 101 includes a CPU 102, an external storage apparatus 103, an input interface 104, an output interface 105, a ROM 106, a RAM 107, a wired LAN interface 108, a wireless LAN interface 109, and a USB interface 110.

The CPU 102 is a system control unit and controls the entire information processing apparatus 101. The CPU 102 executes various processing by reading a program stored in a storage medium such as the external storage apparatus 103 or the ROM 106 into the RAM 107 as a work area and executing the program.

The external storage apparatus 103 is, for example, a storage apparatus such as a hard disk drive (HDD) or a solid state drive (SSD), and stores application programs, an operating system (OS), a driver of a printing apparatus 121, and various other types of data.

A keyboard 111 and a mouse 112 are connected to the input interface 104. The input interface 104 acquires information related to user operations received via an input apparatus such as the keyboard 111 or the mouse 112, and transmits the information to the CPU 102. A display unit 113, which is a display device such as a display, is connected to the output interface 105.

The ROM 106 is, for example, a non-volatile storage, and stores fixed data such as programs to be executed by the CPU 102, data tables, and an embedded operating system (hereinafter, referred to as OS) program, and the like. In the present embodiment, the ROM 106 stores a portal app, a setup app, and the like. In the following description, the portal app is referred to as a first application 114, and the setup app is referred to as a second application 115.

The first application 114 and the second application 115 are applications related to devices to be connected to the information processing apparatus 101. In the present embodiment, a device to be connected to the information processing apparatus 101 is a printer 121. The first application 114 is an application capable of instructing execution of a function of a printer 121 which is connected to the information processing apparatus 101. The second application 115 is an application for setting up a printer 121 which is connected to the information processing apparatus 101. In the present embodiment, the CPU 102 reads the first application 114 and the second application 115 into the RAM 107 and executes them to perform various processing including setup. In the present embodiment, it is assumed that the first application 114 is a portal application capable of executing not only a function of activating the second application 115 and causing the second application 115 to set up the printer 121, but also a print job transmission function and a scan job transmission function. Specifically, the print job transmission function is a function of transmitting, to the printer 121, a print job for causing the printer 121 to print image data selected by the user on the information processing apparatus 101. Specifically, the scan job transmission function is a function for causing the printer 121 to execute a scan, and transmitting a scan job for causing the information processing apparatus 101 to transmit image data acquired by the scan to the printer 121. The second application 115 is assumed to be an application dedicated to setup, which has a function of setting up a printer, but does not have a print job transmission function or a scan job transmission function. However, the present invention is not limited to this configuration, and for example, the second application 115 may also have a print job transmission function and a scan job transmission function.

The wired LAN interface 108, the wireless LAN interface 109, and the USB interface 110 are communication interfaces for performing data communication with external devices. The wired LAN interface 108 is an interface capable of wired communication with an external device via a router 151 or the like. The wireless LAN interface 109 is an interface capable of wireless communication with an external device via a wireless LAN access point 152 or the like. The USB interface 110 is an interface capable of performing local communication with an external device.

The configuration of the information processing apparatus 101 is not limited to the above-described configuration, and appropriately includes configurations corresponding to functions that can be executed by a device applied as the information processing apparatus 101.

Next, a hardware configuration of the printer 121 will be described. The printer 121 includes a CPU 122, a ROM 123, a RAM 124, an input interface 125, an output interface 126, a wired LAN interface 127, a wireless LAN interface 128, a USB interface 129, and a print engine 130.

Further, an operation unit 131 is connected to the input interface 125, and a display unit 132 is connected to the output interface 126. Description of similar configurations to those of the information processing apparatus 101 will be omitted.

The print engine 130 is, for example, a module that realizes print processing by controlling a printing unit (not illustrated) that executes a print function based on print data, print settings, print control information, and the like received from the first application 114 or the like. The operation unit 131 is, for example, an interface for receiving an input of various settings from a user and an instruction of an operation or the like.

The information processing apparatus 101 and the printer 121 are connected to each other via respective interfaces and can thereby communicate. For example, the USB interface 110 of the information processing apparatus 101 and the USB interface 129 of the printer 121 may be connected by a USB cable. For example, they may be connected directly by a single USB cable, or may be connected via a USB hub (not illustrated) using two USB cables. In a case where wired communication is performed between the wired LAN interface 108 of the information processing apparatus 101 and the wired LAN interface 127 of the printer 121, the information processing apparatus 101 and the printer 121 are connected via the router 151. In a case where wireless communication is performed between the wireless LAN interface 109 of the information processing apparatus 101 and the wireless LAN interface 128 of the printer 121, the information processing apparatus 101 and the printer 121 are connected via the wireless LAN access point 152. When the router 151 and the wireless LAN access point 152 are on the same network, communication by both the wired LAN and the wireless LAN is possible. Therefore, the wired LAN interface 108 of the information processing apparatus 101 and the wireless LAN interface 128 of the printer 121 may be connected, and the wireless LAN interface 109 of the information processing apparatus 101 and the wired LAN interface 127 of the printer 121 may be connected. The router 151 and the wireless LAN access point 152 are connected to the Internet, and the information processing apparatus 101 and the printer 121 can access the Internet through their respective wired LAN interfaces and wireless LAN interfaces. Three types of interfaces such as wired LAN, wireless LAN, and USB have been described as methods of communication between the information processing apparatus 101 and the printer 121. For example, configuration may be such that not all three types of interfaces are provided; it is sufficient that one of the types of interface is provided.

### <Direct Connection Method>

Direct connection refers to an embodiment in which apparatuses are directly connected to each other (i.e., by peer to peer) wirelessly without going through an external apparatus such as the wireless LAN access point 152. Direct connection is also referred to as a peer to peer connection (P2P connection). The printer 121 is operable in a mode (direct connection mode), one of multiple connection modes, for communicating via a direct connection. In Wi-Fi communication, there are a plurality of modes, such as a software AP mode and a Wi-Fi Direct (WFD) mode, for communicating by direct connection.

A mode in which direct connection is performed by WFD is called WFD mode. WFD is a standard established by Wi-Fi Alliance, and is a standard included in the IEEE 802.11 series communication standards. In WFD mode, after a device that is to be a communication partner is searched for by a device search command, the roles of P2P group owner (GO) and P2P client are determined, and then remaining wireless connection processing is performed. The group owner corresponds to a master station (parent device) in Wi-Fi, and the client corresponds to a slave station (child device) in Wi-Fi. This determination of roles corresponds, for example, to a GO Negotiation in P2P. In WFD mode prior to the determination of the roles, the printer 121 is in a state in which it is neither a master station nor a slave station. Specifically, firstly, one device issues a device search command for a device with which it is to perform communication, and searches for a device that is connected in WFD mode. When another device which is to be a communication partner is found, the devices confirm information on the services and the functions that each other can provide. Note that this device provision information confirmation is optional and is not essential. The device provision information confirmation phase corresponds to, for example, provision discovery in P2P. Next, by confirming each other's device provision information, it is determined which will perform the role of P2P client and which the role of P2P group owner. Next, when the client and the group owner are decided, parameters for performing communication by WFD are exchanged between the two. Based on the exchanged parameters, the remaining wireless connection processing and IP connection processing are performed between the P2P client and group owner. In WFD mode, the printer 121 may operate as a GO without the printer 121 executing the above-described GO Negotiation. That is, the printer 121 may operate in an autonomous GO WFD mode. States in which the printer 121 is operating in the WFD mode are specifically a state in which a connection by WFD has not been established but the printer 121 is operating as a GO, and a state in which a connection by WFD has been established and the printer 121 is operating as a GO, for example.

In the software AP mode, among devices with that are communicating (for example, the information processing apparatus 101 and the printer 121), one device (for example, the information processing apparatus 101) is the client, which performs the role of requesting various services from the other. The other device realizes a function of an AP in Wi-Fi by software settings. The software AP corresponds to a master station in Wi-Fi, and the client corresponds to a slave station in Wi-Fi. In the software AP mode, the client searches for a device which is to be a software AP by a device search command. When a software AP is found, the remaining wireless connection processing (establishing a wireless connection or the like) is performed between the client and the software AP, and then IP connection processing (assigning an IP address or the like) is performed. For commands and parameters that are transmitted and received in a case of a wireless connection between a client and a software AP, those defined in the Wi-Fi standards may be used, and description thereof will be omitted here.

In the present embodiment, when the printer 121 establishes and maintains a direct connection, it operates as a master station in the network to which the printer 121 belongs. The master station is an apparatus that constructs a wireless network, and is an apparatus that provides a slave station with a parameter to be used for connection to the wireless network. The parameter to be used for connection to the wireless network is, for example, a parameter related to a channel used by the master station. The slave station receives the parameter, and is thereby able to connect to a wireless network established by the master station by using the channel used by the master station. In the direct connection mode, since the printer 121 operates as a master station, the printer 121 can determine which frequency band is to be used and which channel is to be used for communication in the direct connection mode. In the present embodiment, it is assumed that the printer 121 can use a channel corresponding to a 2.4 GHz frequency band and a channel corresponding to a 5 GHz frequency band for communication in the direct connection mode.

### <Infrastructure Connection Method>

The infrastructure connection is an embodiment of a connection wherein a connection is made to an AP (for example, the wireless LAN access point 152) which controls a network for devices (for example, the information processing apparatus 101 and the printer 121) that perform communication, and wherein the devices communicate with each other via the AP. The printer 121 is operable in a mode (infrastructure connection mode), one of multiple connection modes, for communicating over an infrastructure connection.

In an infrastructure connection, each device searches for an AP using a device search command. When the AP is found, the remaining wireless connection processing (establishing a wireless connection or the like) is performed between the device and the AP, and then the processing of the IP connection (assigning an IP address or the like) is performed. For commands and parameters that are transmitted and received to realize a wireless connection between the device and the AP, those defined in the Wi-Fi standards may be used, and description thereof will be omitted here.

In the present embodiment, when the printer 121 operates on an infrastructure connection, the wireless LAN access point 152 operates as a master station, and the printer 121 operates as a child device. That is, in the present embodiment, the infrastructure connection refers to a connection between the printer 121, which operates as the child device, and the apparatus, which operates as the parent device. When the printer 121 has established an infrastructure connection and the information processing apparatus 101 has also established an infrastructure connection with the wireless LAN access point 152, communication between the printer 121 and the information processing apparatus 101 via the wireless LAN access point 152 is enabled. Since the channel used for communication in the infrastructure connection is determined by the wireless LAN access point 152, the printer 121 performs communication on the infrastructure connection using the channel determined by the wireless LAN access point 152. In the present embodiment, it is assumed that the printer 121 can use a channel corresponding to a 2.4 GHz frequency band and a channel corresponding to a 5 GHz frequency band for communication on the infrastructure connection. In addition, the printer 121 can use a channel corresponding to a DFS band in the 5 GHz frequency band for communication on infrastructure connection. In order to communicate with the printer 121 via the wireless LAN access point 152, the information processing apparatus 101 needs to recognize that the printer 121 belongs to a network formed by the wireless LAN access point 152 to which the information processing apparatus 101 belongs.

### <Connection Setting Processing>

In the present embodiment, the information processing apparatus 101 executes a connection setting (network setting) which is a setting for operating the printer 121 according to at least one communication method among the infrastructure connection and the direct connection, by wireless communication with the printer 121. Connection setting processing in the present embodiment is also called a cableless setup (CLS) because it is executed by wireless communication. Note that the connection setting processing may be executed by wired communication. The information processing apparatus 101 performs the connection setting processing for the printer 121 when the second application 115, which is stored in the external storage apparatus 103, or the like is activated. The printer 121 is operable in a connection setting mode (connection setting state), which is a mode for executing the connection setting processing, and executes the connection setting processing while operating in the connection setting mode. Details of the connection setting mode will be described later.

When causing the printer 121 to operate in the infrastructure connection mode, the information processing apparatus 101 wirelessly transmits to the printer 121 infrastructure setting information, which is setting information for causing operation in the infrastructure connection mode. The infrastructure setting information includes information about the wireless LAN access point 152. The information related to the wireless LAN access point 152 includes, for example, a service set identifier (SSID), a password, information related to a frequency band, and the like.

Meanwhile, when causing the printer 121 to operate in the direct connection mode, the information processing apparatus 101 wirelessly transmits to the printer 121 direct setting information, which is setting information for causing operation in the direct connection mode. The direct setting information includes an instruction for enabling a WFD function, causing operation as a Group Owner, and enabling an access point setting of the printer 121. Further, the information processing apparatus 101 acquires from the printer 121 connection information necessary for direct connection with the printer 121. The connection information for direct connection with the printer 121 includes, for example, information such as an SSID and a password of the printer 121.

In the present embodiment, a direct connection for setting a connection between the information processing apparatus 101 and the printer 121 is used for transmission of infrastructure setting information and direct setting information and acquisition of information for direct connection with the printer 121 in the connection setting processing. In the present embodiment, Wi-Fi connection setting processing is executed as the direct connection for connection setting, but for example, a wireless communication standard other than Wi-Fi such as Bluetooth may be used, or a wired communication standard such as wired LAN or Universal Serial Bus (USB) may be used.

After the connection setting processing establishes a Wi-Fi infrastructure connection or direct connection between the information processing apparatus 101 and the printer 121, communication can be performed between the information processing apparatus 101 and the printer 121 via the established connection. Specifically, for example, the information processing apparatus 101 can transmit, to the printer 121 via the established connection, a print job for causing the printer 121 to execute printing and a scan job for causing the printer 121 to execute scanning. In the present embodiment, the printer 121 can be operated in the infrastructure connection mode or the printer 121 can be operated in the direct connection mode by the connection setting processing, but the present invention is not limited to this embodiment. For example, an embodiment in which the printer 121 can only be operated in the infrastructure connection mode (that is, the printer 121 cannot be operated in the direct connection mode) by the connection setting processing is also possible.

### <Connection Setting Mode>

The printer 121 is operable in a connection setting mode. A trigger for the printer 121 to start operation in the connection setting mode may be, for example, a user pressing a button for the connection setting mode, or the printer 121 starting operation when activated (powered on) for the first time after the product is delivered. The connection setting mode button may be a physical button included in the printer 121 or may be a virtual button displayed on the display unit 132 by the printer 121.

When the printer 121 starts operating in the connection setting mode, it enables both Wi-Fi communication and BLE communication. Specifically, the printer 121 activates an AP (connection setting AP) inside the printer 121 dedicated to the connection setting mode as Wi-Fi communication activation processing. By this, the printer 121 enters a state in which it is able to establish a direct connection with the information processing apparatus 101 by Wi-Fi. It is assumed that the connection information (SSID or password) for connecting to the connection setting AP is held in advance in a setup application installed in the information processing apparatus 101, and the information processing apparatus 101 recognizes the connection information for connecting to the connection setting AP in advance. Note that an embodiment in which an encryption method is not set in the connection setting AP and a password is not required may be employed for the connection with the AP. Therefore, unlike the connection information of an AP enabled in the direct connection mode, it is assumed that the connection information for connecting to a connection setting AP cannot be arbitrarily changed by the user. Note that in the connection setting mode, the printer 121 may connect to the information processing apparatus 101 by Wi-Fi Direct (WFD) instead of normal Wi-Fi. That is, the printer 121 may operate as a Group Owner and receive a setting command from the information processing apparatus 101 by WFD communication.

The configuration of the printer 121 is not limited to the configuration illustrated in FIG. 1, and appropriately includes configurations corresponding to functions that can be executed by a device applied as the printer 121. Further, the printer 121 may be, for example, a printer using an ink jet recording method, or a printer using another recording method such as an electrophotographic method, a thermal transfer method, a dot impact method, or the like. In addition, the printer 121 may be a multifunctional peripheral (MFP) in which scanner and facsimile functions or the like are integrally configured.

In the information processing system as illustrated in FIG. 1, in order to use the printer 121 from the information processing apparatus 101, the user first sets up the printer 121 using the second application 115. By setting up the printer 121, the user can use the printer 121 from the information processing apparatus 101 using the first application 114. Meanwhile, the user may use the first application 114 before setting up the printer 121. In this case, since the setup of the printer 121 has not been completed, the user cannot use a function of the printer 121 by using the first application 114.

Therefore, the first application 114 may have a setup function for downloading the second application 115 from the first application 114, activating the second application 115, and performing the setup. However, since the first application 114 and the second application 115 can operate as independent applications, there is a need to achieve an improvement in user convenience.

For example, a user may be required to agree to a software license agreement (end-user license agreement (EULA)) when using the first application 114 or the second application 115. Even if the user has agreed to the software license agreement when the user activated the first application 114, a screen for a software license agreement similar to that of the first application 114 is displayed when the second application 115 is activated, and the user needs to again agree to that agreement. In the following description, a software license agreement may be referred to as a license agreement.

In the present embodiment, a configuration in which processing for displaying the screen of the license agreement is different based on the activation source of the second application 115 will be described. With such a configuration, when the second application 115 is activated from the first application 114, a screen similar to that for the license agreement displayed in the first application 114 is not displayed in the second application 115. This eliminates the need for the user to agree again in the second application 115 to a license agreement they agreed to in the first application 114.

Further, for example, the first application 114 is activated by the user when the user uses functions of the printer 121 such as printing and scanning. Meanwhile, the second application 115 is rarely activated by the user once the printer 121 has been set up. Therefore, the second application 115 displays a screen related to methods for using the printer 121 or the like when the setup of the printer 121 is completed.

The first application 114 may display a screen related to methods for using the printer 121 or the like from a screen of the first application 114. There are cases where the user displays a screen related to methods for using the printer 121 or the like from a screen of the first application 114 even before performing the setup of the printer. Therefore, there are cases where the same screen is displayed to the user due to the second application 115 displaying the screen described above upon completion of the setup of the printer 121.

In the present embodiment, a configuration will be described in which the display of the setup completion screen is controlled so that an interface display for receiving an instruction as to whether or not to display the screen related to the methods of using the printer 121 or the like is made different based on the activation source of the second application 115. Accordingly, when the second application 115 is activated from the first application 114 and the printer is set up, the user can select whether or not to display a screen for methods of using the printer or the like from the setup completion screen.

Further, for example, depending on the timing at which the application is released from the provider, the models of the printer compatible with the first application 114 and the models of the printer that can be set up by the second application 115 may be different. In such a case, there are cases where, when the second application 115 is activated by the first application 114 and the printer is set up, a printer that is not compatible with the first application 114 is set up. If a printer that is not compatible with the first application 114 is set up, the user may not be able to use the printer from the first application 114 despite completing the printer setup.

In the present embodiment, a configuration in which, based on the activation source of the second application 115, the second application 115 performs control to change which printer models are made to be the target of setup will be described. Thus, when the second application 115 is activated from the first application 114, the second application 115 can set up a printer compatible with the first application 114.

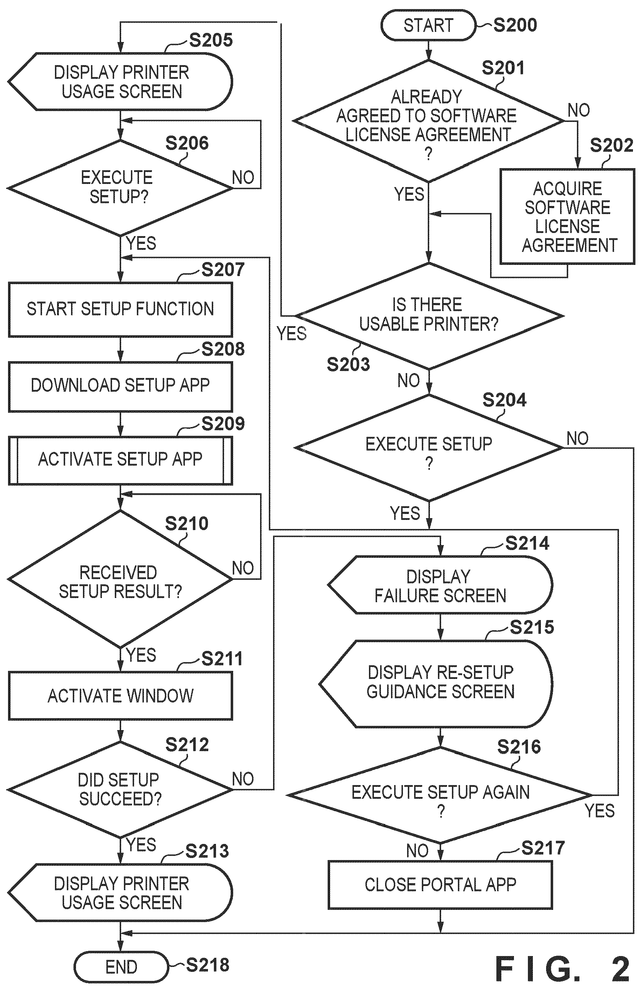

FIG. 2 is a flowchart illustrating an example of processing executed at the time of setup of the printer 121 using the first application 114 according to the present embodiment. The processing executed by the first application 114 of FIG. 2 is realized, for example, by the CPU 102 loading a control program stored in a memory such as the ROM 106 into the RAM 107 and executing the control program.

Step S200 indicates the beginning of the processing of FIG. 2. When the first application 114, which is installed on the information processing apparatus 101, is activated by the user, the first application 114 executes the processing illustrated in FIG. 2.

In step S201, the first application 114 determines whether the user has agreed to a software license agreement (end-user license agreement (EULA)). In step S201, if the first application 114 determines that the software license agreement has not been agreed to, it proceeds to the processing of step S202. Meanwhile, if the first application 114 determines that the software license agreement has been agreed to, it proceeds to the processing of step S203. Specifically, the first application 114 refers to a region (not illustrated) for storing application data of the first application 114 provided in the ROM 106 or the like by processing of step S202 to be described later. The first application 114 makes the above-described determination by referring to information indicating agreement by the user to the software license agreement.

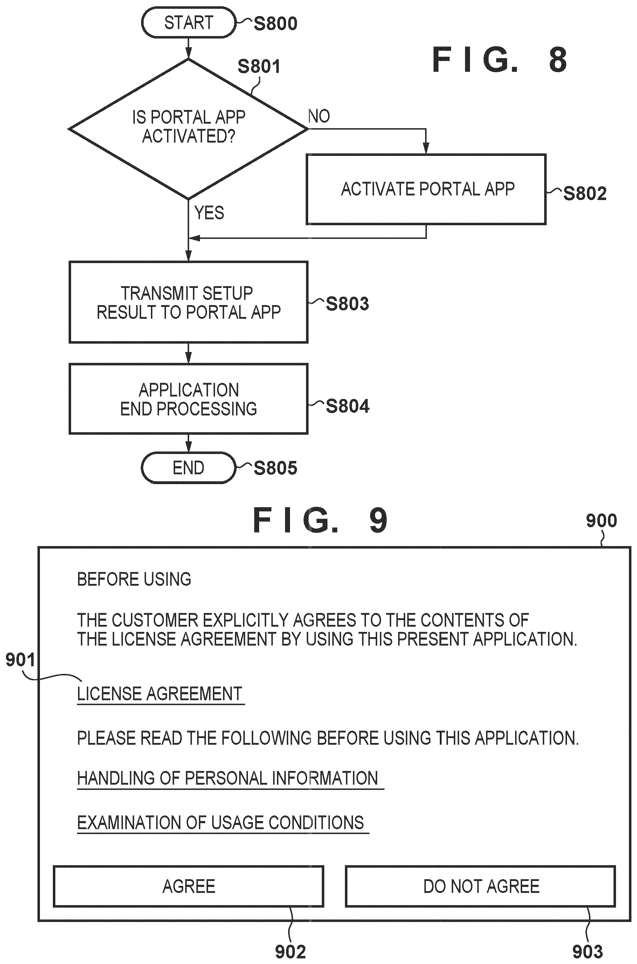

In step S202, the first application 114 performs control to acquire agreement to the software license agreement. Specifically, the first application 114 displays a software license acquisition screen 900 illustrated in FIG. 9 on the display unit 113. In other words, the software license acquisition screen 900 is also a screen displayed based on the activation of the first application 114. The software license acquisition screen 900 includes a link 901 to the contents of the license agreement, an agreement button 902 for agreeing to the license agreement, a non-agreement button 903 for not agreeing to the license agreement, and the like. In other words, the software license acquisition screen 900 is also an agreement screen for requesting the user's agreement. The contents of the license agreement include the contents of the license agreement of the second application 115 in addition to the contents of the license agreement of the first application 114. That is, the license agreement serves as a license agreement for a plurality of applications for using the printer 121. In other words, the processing of step S202 is control for acquiring both an agreement to the software license agreement regarding the first application 114 and an agreement to the software license agreement regarding the second application 115. Agreement to a software license agreement regarding another application provided by the vendor providing the first application 114 or the second application 115 may also be acquired by the software license acquisition screen 900. Accordingly, when a plurality of applications are used in order to use the printer 121, the user is not required to agree to the license agreement for each application. Therefore, the user can immediately use each application.

In step S202, when the user presses the agreement button 902 for agreeing to the license agreement, the first application 114 determines that the user has agreed to the contents of the license agreement (agreement to the license agreement has been acquired), and proceeds to the processing of step S203. In step S202, the first application 114 may end the processing of FIG. 2 when the user presses the non-agreement button 903 for not agreeing to the license agreement, for example.

In addition, in step S202, the first application 114 stores information indicating that the user has agreed to the license agreement in a region (not illustrated) for storing application data of the first application 114 provided in the ROM 106. Accordingly, when the user activates the first application 114 thereafter, the license agreement acquisition screen 900 will not displayed again. Note that the invention is not limited this embodiment, and the license agreement acquisition screen 900 may be displayed every time the first application 114 is activated.

In step S203, the first application 114 determines whether there is a printer 121 that can be used from the first application 114. In step S203, if the first application 114 determines that there is no printer 121 that can be used, it proceeds to the processing of step S204. Meanwhile, if the first application 114 determines that there is a printer 121 that can be used, it proceeds to the processing of step S205. Specifically, the first application 114 acquires print queues installed in the information processing apparatus 101, and determines whether or not there is a print queue of a printer 121 that can be used from the first application 114. Note that a print queue is an object that holds print data for printing and provides a function for sequentially performing printing, and one or a plurality of print queues are created for each device that provides a printing function. A printer 121 that can be used from the first application 114 is a printer 121 provided by the same vendor as the vendor providing the first application 114. In the present embodiment, a print queue of a printer 121 is created in processing for setting up the printer 121 by the later-described second application 115. Note that the processing of step S203 may be omitted. In this embodiment, the processing may be always proceed to step S205 after step S201 or after step S202.

In step S204, the first application 114 determines whether to perform a setup function. If the first application 114 determines to perform the setup function, it proceeds to step S207. Meanwhile, if the first application 114 determines to not perform the setup function, it proceeds to step S218. In the present embodiment, the setup function includes processing in which the first application 114 downloads the second application 115 from an external server or the like and activates the second application 115. Specifically, the setup function is a function in which the first application 114 activates the second application 115 and a setup of the printer 121 is performed by the second application 115. Specifically, the first application 114 displays a screen (not illustrated) for allowing the user to select whether or not to execute the setup function. On this screen, for example, buttons for the user to select whether to execute the setup function or to close without executing the setup are provided. When the first application 114 detects that the user pressed a button for executing the setup function, the processing proceeds to step S207. Meanwhile, when the first application 114 detects that the user pressed a button for closing without executing the setup function, the processing proceeds to step S218.

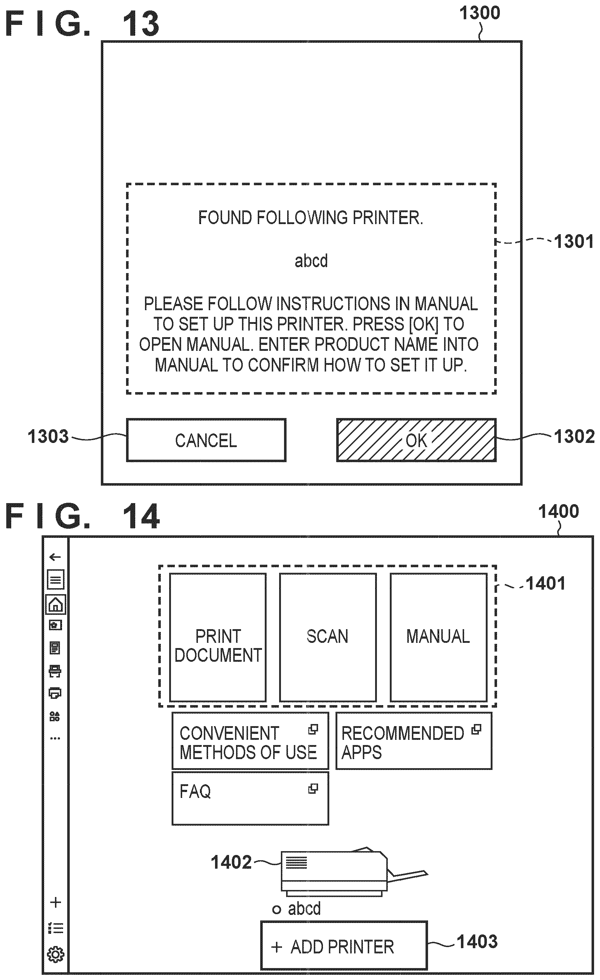

In step S205, the first application 114 selects one among printers 121 that can be used from the first application 114, and a screen for using a function of the selected printer 121 is displayed. Specifically, the first application 114 displays a printer usage screen 1400 illustrated in FIG. 14 on the display unit 113. Specifically, a printer 121 that can be used from the first application 114 is, for example, a printer 121 corresponding to capability information acquired and stored in the past by the first application 114, and is a printer 121 registered in the first application 114. The printer usage screen 1400 includes printer function buttons 1401, a printer icon 1402, a setup start button 1403, and the like. The setup start button 1403 is a button for setting up a new printer 121. In other words, the setup start button 1403 is also a button for adding a new printer 121. Screen display of the printer function buttons 1401, the printer icon 1402, and the like will be described in detail later in step S213. The printer usage screen 1400 has an interface for displaying a screen related to a printer 121. For example, the printer usage screen 1400 has an interface for displaying convenient ways to use the printer 121. The convenient ways to use the printer 121 are, in other words, methods for using the printer 121. Specifically, the methods for using the printer 121 are, for example, a method of executing printing by the printer 121 or a method of executing copying by the printer 121. Also, more specifically, for example, they are methods for transmitting a print job from a PC or a smartphone to the printer 121. More specifically, for example, they are methods of printing a poster, a disc label, a calendar, an ID photograph, a nail sticker, or the like by the printer 121. More specifically, for example, they are methods for registering with a service provided by a vendor that supplies the printer 121. When an interface for displaying convenient ways of using the printer 121 is pressed by the user, for example, the first application 114 displays a Web page in which the usage of the printer 121 is described. Further, the printer usage screen may display an interface for displaying a recommended app related to the printer 121, an interface for displaying an FAQ regarding a method of using the printer 121, and the like. The interface displayed on the printer usage screen 1400 is not limited to these, and other interfaces may be included. In addition, when the first application 114 is activated for the first time since the first application 114 was installed on the information processing apparatus 101, step S204 and step S206 may be skipped and the processing may be performed from step S207.

In the processing of step S205, the method by which the first application 114 selects one of the printers 121 that can be used from the first application 114 may be a method of selecting the printer 121 used most recently by the user from the information processing apparatus 101. Note that a plurality of printers 121 that can be used from the first application 114 may be displayed on the printer usage screen 1400.

In step S206, the first application 114 determines whether to perform the setup function. If the first application 114 determines to perform the setup function, it proceeds to step S207. Meanwhile, if the first application 114 determines to not perform the setup function, it repeats the determination of step S206. Specifically, the first application 114 determines to execute the setup function when it is detected that the user has pressed the setup start button 1403 on the printer usage screen 1400 illustrated in FIG. 14. Meanwhile, when the setup start button 1403 is not pressed by the user, the first application 114 determines to not execute the setup function.

In step S207, the first application 114 starts the setup function. Specifically, a screen (not illustrated) for notifying the user that the setup function is about to be started is displayed. A button for starting the setup function is displayed on that screen. When the first application 114 detects that that button has been pressed by the user, the first application 114 starts the setup function described below. Also, in step S207, prior to initiating the setup function, the first application 114 may confirm its version. The first application 114 may perform a version upgrade if its version is not the latest version. In other words, the first application 115 may update its version to the latest version. Benefits of making the first application 114 the latest version prior to initiating the setup function are described in detail in step S208 discussion.

In step S208, the first application 114 downloads the second application 115 from an external server (not illustrated) to the information processing apparatus 101. The version of the second application 115 to be downloaded may always be the latest version or may be a specific version. When the first application 114 is upgraded to the latest version in step S207, the second application 115 to be downloaded by the first application 114 is also the latest version, and thereby the latest setup function can be used. In addition, the latest specifications can be used in linkage between the first application 114 and the second application 115 including specifications of command line arguments used when activating the second application 115, which will be described later. Meanwhile, if the first application 114 is not the latest version, a particular version of the second application 115 corresponding to the current version of the first application 114 may be downloaded. That is, in step S208, the second application 115 of the version corresponding to the version of the first application 114 is downloaded. Accordingly, it is possible to prevent a failure in the linkage specifications from occurring between the first application 114 and the second application 115 in consideration of compatibility of versions. When the second application 115 is downloaded, the second application 115 is installed on the information processing apparatus 101. If the second application 115 has already been downloaded to the information processing apparatus 101, this processing may be omitted.

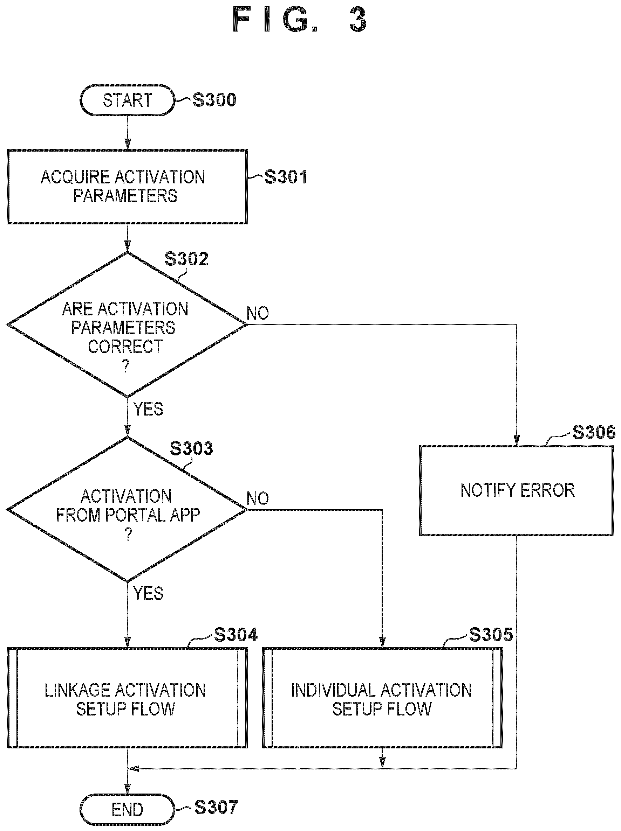

In step S209, the first application 114 activates the second application 115 downloaded to the information processing apparatus 101. At this time, the activation instruction for the first application 114 to activate the second application 115 includes an activation command for activating the second application 115 and activation parameters. The activation parameters are information indicating an activation source application of the second application 115, and are optionally assigned to the activation command. In the present embodiment, the activation parameters are given as command line arguments. Further, in the present embodiment, a command line argument that the first application 114 optionally gives in the activation instruction of the second application 115 is defined as "/BOOT_PORTAL:YES". In step S209, the second application 115 activated from the first application 114 performs processing for setting up the printer 121. Details of the processing for setting up the printer 121 will be described later with reference to FIG. 3.

In step S210, the first application 114 determines whether a setup result was received from the second application 115. In step S210, if the first application 114 determines that a setup result was received, it proceeds to step S211. Meanwhile, if the CPU 102 determines that a setup result was not received, the processing of step S210 is repeated. A specific method by which the first application 114 receives the setup result from the second application 115 will be described later with reference to FIG. 8.

In step S211, the first application 114 puts its own screen in an active state. In the present embodiment, the active state of the screen of the application indicates that the screen is currently displayed on the foreground of the display unit 113 and is operable by the user. For example, while the second application 115 is performing the setup of the printer 121, when the user uses another application, the screen of the first application 114 may be displayed behind the screen of the other application. Even in such a case, when the first application 114 puts its own screen in an active state, the screen of the first application 114 is displayed in the foreground of the display unit 113 and in a state in which it can be operated by the user. Thus, in the processing of step S213 or step S214 to be described later, the user can execute an operation on the screen of the first application 114 without hesitation. Further, for example, while the second application 115 is executing processing, the first application 114 may be closed by a user's operation or the like. Even in such a case, the first application 114 is activated by processing when the second application 115 closes as in later-described FIG. 8. This makes it possible to continue the subsequent processing of FIG. 2. Details of the sequence of operations in which the first application 114 receives the setup result in step S210 and puts the screen of the first application 114 in the active state in step S211 are described below in FIG. 8.

Also, while an embodiment was described in which, in step S211, the first application 114 is in the active state regardless of the state of its own screen, the present invention is not limited thereto. For example, configuration may be such that the screen of the first application 114 is not changed to the active state depending on a state of the screen of the first application 114, or on a state of the operating system (OS) (not illustrated) of the information processing apparatus 101 and of a screen of another application. For example, when the screen of the first application 114 is minimized by a user's operation, the first application 114 may determine that a screen of another application is what is desired to be displayed preferentially. In this case, configuration may be such that the first application 114 does not change the screen of the first application 114 to the active state in step S211, but rather blinks an app icon of the first application 114 displayed on the display unit 113 or the like. The user can be notified of the completion of the setup function of the first application 114 by, for example, blinking the app icon of the first application 114.

In step S212, the first application 114 determines whether the printer 121 has been successfully set up based on information on success or failure of the setup processing received from the second application 115. In step S212, if the first application 114 determines that the setup succeeded, it proceeds to step S213. Meanwhile, if the first application 114 determines that the setup did not succeed, it proceeds to step S214. A detailed description of reception of information as to the success/failure of the setup processing in step S212 will be described later with reference to FIG. 8.

In step S213, the first application 114 displays a screen for using the setup function of the printer 121 on the display unit 113. Specifically, the first application 114 is an application by which a user can execute an instruction for a function of the printer 121 connected to the information processing apparatus 101. Specifically, the first application 114 displays the printer usage screen 1400 illustrated in FIG. 14 on the display unit 113. The printer usage screen 1400 includes the configuration described in step S205 or the like. Here, the printer function buttons 1401 are buttons for executing each function of the printer 121 such as printing and scanning. The user can execute the functions of the printer 121 by pressing the respective printer function buttons 1401. Specifically, the printer function buttons 1401 include a button for executing a function of transmitting a print job for causing the printer 121 to execute printing, and a button for executing a function of transmitting a scan job for causing the printer 121 to execute scanning. The printer function buttons 1401 may include, for example, a button for displaying a manual of the printer 121. The printer icon 1402 illustrates an image of the printer 121 corresponding to the printer model name. In step S213, it is assumed that the first application 114 searches the network to which the information processing apparatus 101 belongs for the printer 121 corresponding to identification information by using identification information of the printer 121 acquired from the second application 115 as the setup result. The printer icon 1402 is assumed to indicate a printer 121 discovered by the search. That is, in step S213, a screen in which the functions of the printer 121 can be used is displayed based on the fact that the printer 121 has been successfully set up. Accordingly, after the setup of the printer 121 is completed, the user can use the set up printer 121 from the printer usage screen 1400 without activating the first application by himself/herself.

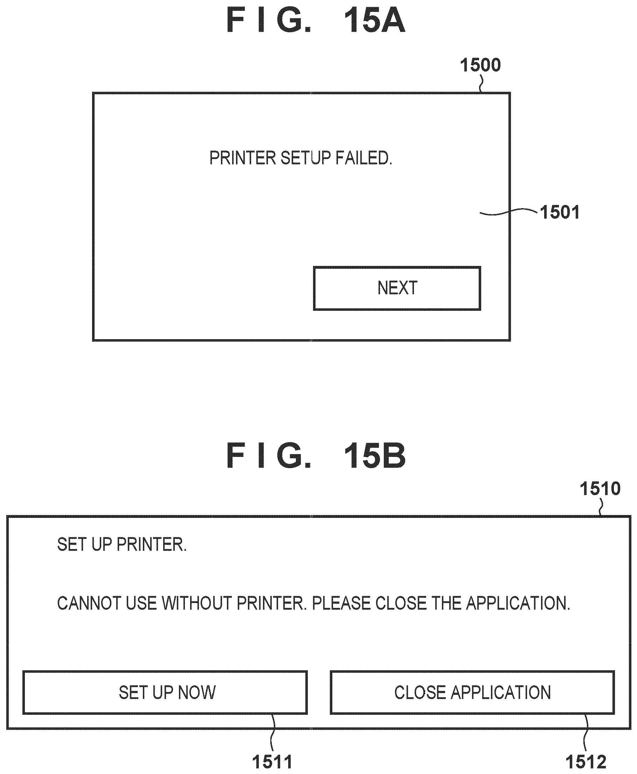

In step S214, the first application 114 displays a setup failure notification screen 1500 illustrated in FIG. 15A on the display unit 113. The setup failure notification screen 1500 includes a button 1501 or the like for advancing to the next screen in addition to text indicating that the setup has failed. The first application 114 proceeds to step S215 based on the user pressing the button 1501.

In step S215, the first application 114 displays a re-setup guidance screen 1510 illustrated in FIG. 15B on the display unit 113. The re-setup guidance screen 1510 includes a button 1511 for starting a re-setup function and a button 1512 for closing the application. As described above, even when the setup of the printer 121 by the second application fails, by displaying the re-setup guidance screen, the user can re-set up the printer 121.

In step S216, the first application 114 determines whether to perform a re-setup. If the first application 114 determines to perform the re-setup, it proceeds to step S207. Meanwhile, if the first application 114 determines to not perform the re-setup, it proceeds to step S218. For example, when the user presses the button 1512 for closing the application in FIG. 15B, the first application 114 determines not to perform the re-setup. When the user presses the button 1511 for starting the re-setup function in FIG. 15B, the first application 114 determines to perform the re-setup.

In step S217, the first application 114 closes the screen of the first application 114. After the processing of step S217, the first application 114 proceeds to step S218 and ends the processing of FIG. 2. Step S218 indicates the end of the processing of FIG. 2.

FIG. 3 is a flowchart illustrating an example of processing executed by the second application 115 in the present embodiment. The processing of FIG. 3 is realized, for example, by the CPU 102 loading a control program stored in a memory such as the ROM 106 into the RAM 107 and executing the control program.

Step S300 indicates the beginning of the processing of FIG. 3. The processing of FIG. 3 is started when the second application 115 is activated by the first application 114 in step S209 of FIG. 2. Alternatively, the processing of FIG. 3 is started based on the execution of an executable file (not illustrated) of the second application 115 by a user operation on a desktop of the information processing apparatus 101, a program list screen displayed by the information processing apparatus 101, or the like, without going through the first application 114. In the following description, activation of the second application 115 by the first application 114 may be referred to as a linkage activation. In addition, activation of the second application 115 without going through the first application 114 based on the execution of an executable file (not illustrated) of the second application 115 by the user may be referred to as an individual activation.

In step S301, the second application 115 acquires activation parameters included in the instruction to activate the second application 115. Specifically, the second application 115 acquires information included in the instruction to activate the second application 115. In the present embodiment, the second application 115 acquires command line arguments included in the activation instruction. At this time, a prefix of the command line arguments is defined as a parameter name, and a subsequent character string is defined as a parameter value. For example, if the command line argument is "/BOOT_PORTAL:YES", "/BOOT_PORTAL:" is acquired as the parameter name and "YES" is acquired as the parameter value.

In step S302, the second application 115 determines whether or not the activation parameters acquired in step S301 are correct values. In step S302, if the second application 115 determines that the activation parameters are correct, it proceeds to step S303. Meanwhile, if the second application 115 determines that the activation parameters are not correct, it proceeds to step S306. Specifically, the second application 115 determines whether or not the activation parameters are correct based on whether or not the number of activation parameters acquired in step S301 or the values thereof conform to a predetermined description rule. For example, assume a specification in which the activation parameters sent from the first application 114 are described as "/BOOT_PORTAL:YES" which indicates linkage activation. In this case, when two or more activation parameters exist, or when a parameter name or a parameter value is not set according to the predetermined description rule, the second application 115 determines that the activation parameters are incorrect. For example, in the case of an incompatibility problem between the version of the first application 114 and the version of the second application 115, the activation parameters are determined to be incorrect. Alternatively, in the case of activation from an application other than the first application 114 which is capable of activating the second application 115, or in the case of activation by a user issuing a command in a terminal, or the like, the activation parameters are determined to be incorrect if the descriptions are different from a predetermined description rule. The predetermined description rule is, in other words, a predetermined format. In the present embodiment, the second application 115 determines that the activation parameters are correct other than in cases where there are two or more activation parameters, and when the parameter name or the parameter value is not set by the predetermined description rule. When the second application 115 is activated individually, the first application 114 does not issue an activation instruction to the second application 115. In the case of an individual activation, no activation parameter is included in the activation instruction for activating the second application 115. That is, the number of activation parameters is 0. In the present embodiment, even when the number of activation parameters is zero, the second application 115 determines that the activation parameters are correct. The processing in step S302 is, in other words, processing of determining that the activation parameters of a description different from the predetermined description rule are incorrect. Further, these determination methods are only examples, and the determination as to whether or not the activation parameters are correct may be by criteria different from the above-described criteria. Further, an embodiment in which this determination is omitted, and the processing always proceeds to step S303 if activation parameters are acquired in step S301 is possible.

In step S303, the second application 115 determines whether the second application 115 was activated from the first application 114. In other words, this determination is processing of determining whether the second application 115 was activated by linkage or was activated independently. The second application 115 proceeds to step S304 if it is determined that the second application 115 has been activated from the first application 114. Meanwhile, the second application 115 proceeds to step S305 if it is determined that the second application 115 has not been activated from the first application. Specifically, the second application 115 determines that it was activated from the first application 114 in the case where the parameter value of the parameter name "/BOOT_PORTAL:" is "YES". That is, in this case, the second application 115 determines that the second application 115 has been activated by linkage. Meanwhile, when the parameter value is a value other than "YES", the second application 115 determines that the activation is not from the first application 114. The case where the parameter value is a value other than "YES" is, for example, a case where the number of activation parameters is 0 as described above, or the like. That is, in this case, the second application 115 determines that the second application 115 has been activated individually.

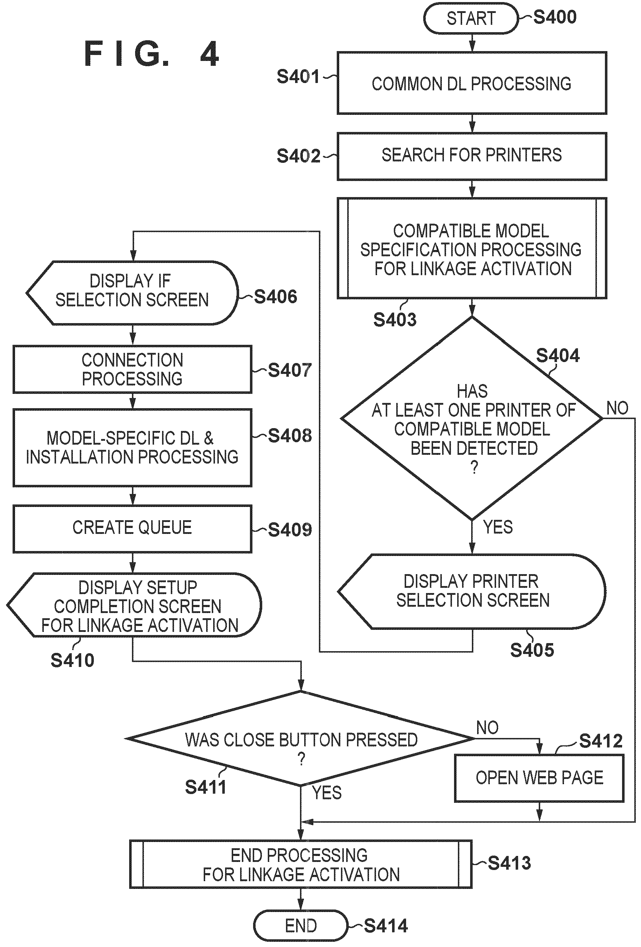

In step S304, the second application 115 executes a setup flow for linkage activation. Details of the setup flow for linkage activation will be described later with reference to FIG. 4.

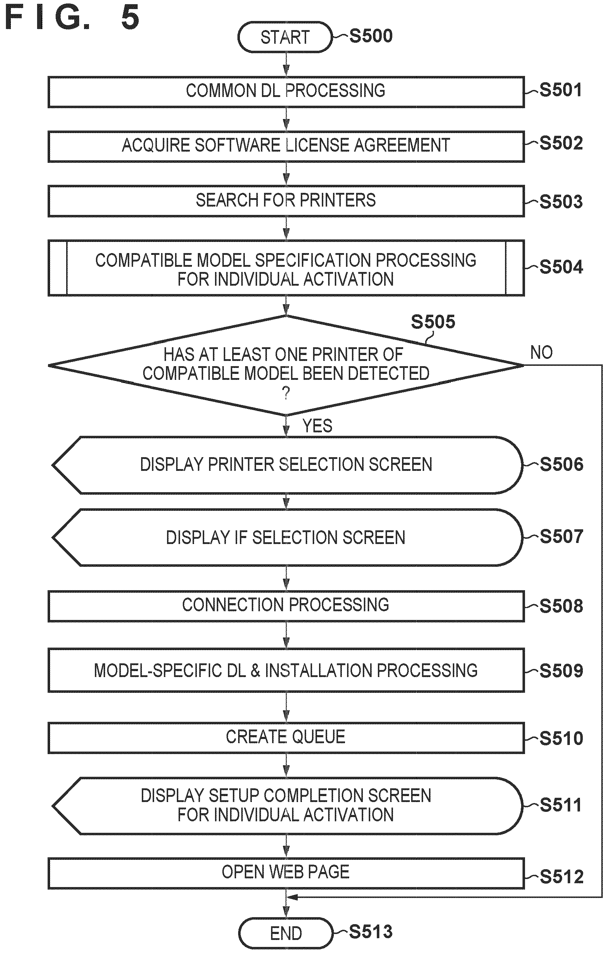

In step S305, the second application 115 executes a setup flow for individual activation. Details of the setup flow for individual activation will be described later with reference to FIG. 5.

In step S306, the second application 115 notifies the first application 114 that the activation parameters are erroneous. Specifically, the second application 115 activates the first application 114, setting a character string indicating that an activation parameter error has occurred as a command line argument. Note that, since the activation parameters are erroneous, it is not determined whether or not the first application 114 is the activation source of the second application 115. Therefore, the second application 115 may proceed to step S307 without performing the processing of step S306. In step S302, the second application 115 notifies the first application 114 that the activation parameters are erroneous, and thereby the first application 114 may transition to the next operation. For example, the first application 114, after receiving the notification of the error from the second application 115, may determine whether the second application 115 is the latest version. Here, the first application 114 may repeat execution of the processing from step S207 to step S209 when it is determined that the second application 115 is not the latest version.

Step S307 indicates that the second application 115 ends the processing of FIG. 3.

FIG. 4 illustrates an example of a setup flow when the second application 115 in the present embodiment is activated by linkage. The processing of FIG. 4 is realized, for example, by the CPU 102 loading a control program stored in a memory such as the ROM 106 into the RAM 107 and executing the control program.

Step S400 indicates the beginning of the processing of FIG. 4. In the processing of FIG. 4, the second application 115 performs the setup in the case of linkage activation in step S304 of FIG. 3. In the processing of FIG. 4, the second application 115 is being activated from the first application 114. When the second application 115 is activated from the first application 114, the user's agreement to the software license agreement regarding the second application 115 has already been acquired in step S202 of FIG. 2 in the first application 114. That is, when the second application 115 is activated by linkage, the second application 115 does not need to perform control for acquiring the user's agreement to the software license agreement regarding the second application 115. For this reason, the second application 115 performs control not to acquire the software license agreement on the basis of the linkage activation. That is, in the case of linkage activation, the second application 115 does not display the software license agreement on the display unit 113. This prevents the user from being asked to agree to a software license agreement again by the second application 115 after the user has activated the first application 114 and agreed to the software license agreement. Note that the second application 115 may acquire information indicating that the user's agreement to the software license agreement regarding the second application 115 has been acquired from the first application 114 in the case of linkage activation.

In the description above, an embodiment in which, when the second application 115 is activated by linkage, control for acquiring the user's agreement to the software license agreement regarding the second application 115 is not performed in the second application 115 is described, but the invention is not limited thereto. Even when the second application 115 is activated by linkage, the second application 115 may perform control for acquiring the user's agreement to the software license agreement regarding the second application 115. Also, in the present embodiment, the control executed by the first application 114 in step S202 may be control that acquires an agreement to the software license agreement regarding the first application 114, but does not acquire an agreement to the software license agreement regarding the second application 115.

In step S401, the second application 115 performs processing for downloading data common to all models. Specifically, the second application 115 performs a download of files commonly necessary for all models in processing to be described later. For example, a file commonly necessary for all models is a content file used when the second application 115 performs a test print, or the like.

In step S402, the second application 115 performs printer search processing. The second application 115 searches for one or more printers 121 belonging to the same network as the network to which the information processing apparatus 101 belongs via the wireless LAN access point 152 and the wired LAN interface 108. Specifically, the second application 115 attempts to acquire identification information (such as a device name) from printers 121 belonging to the same network as the network to which the information processing apparatus 101 belongs. One or more printers 121 corresponding to the one or more pieces of identification information acquired by the attempt are treated as one or more printers 121 detected (discovered) in the search. Specifically, the printers 121 belonging to the same network as the network to which the information processing apparatus 101 belongs are, for example, printers 121 connected to the access point 152 to which the information processing apparatus 101 is connected. The second application 115 may search for printers 121 connected by the USB interface 129 by attempting to acquire identification information from printers 121 connected by the USB interface 129. In addition, for example, in step S402, the second application 115 may search for one or more printers 121 operating in the connection setting mode. Specifically, the second application 115 may attempt to acquire a beacon emitted by a printer 121 operating in the connection setting mode. One or more printers 121 corresponding to the one or more pieces of beacons acquired by the attempt are treated as one or more printers 121 detected in the search. In the present embodiment, it is assumed that, in step S402, both a search for one or more printers 121 belonging to the same network as the network to which the information processing apparatus 101 belongs and a search for one or more printers 121 operating in the connection setting mode are performed.

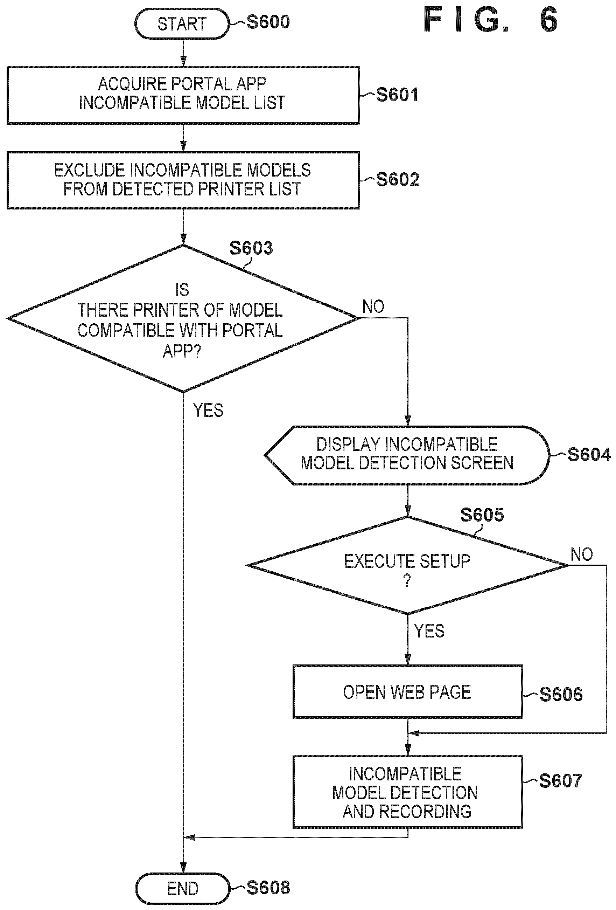

In step S403, the second application 115 performs compatible model specification processing when a printer 121 detected in step S402 is activated by linkage. Details of the compatible model specification processing in the case of a linkage activation will be described later with reference to FIG. 6.

In step S404, the second application 115 determines whether at least one printer 121 of a model compatible with the first application 114 has been detected based on information stored in the processing of step S403. The second application 115 proceeds to step S405 if it is determined that at least one printer 121 of a model compatible with the first application 114 has been detected. Meanwhile, the second application 115 proceeds to step S413 if it is determined that not even one printer 121 of a model compatible with the first application 114 has been detected. Specifically, the second application 115 reads in information on whether at least one printer 121 of a model compatible with the first application 114 has been detected, which is stored in the RAM 107, and makes the determination. A method of storing information on whether at least one printer 121 of a model compatible with the first application 114 has been detected will be described later with reference to FIG. 6.

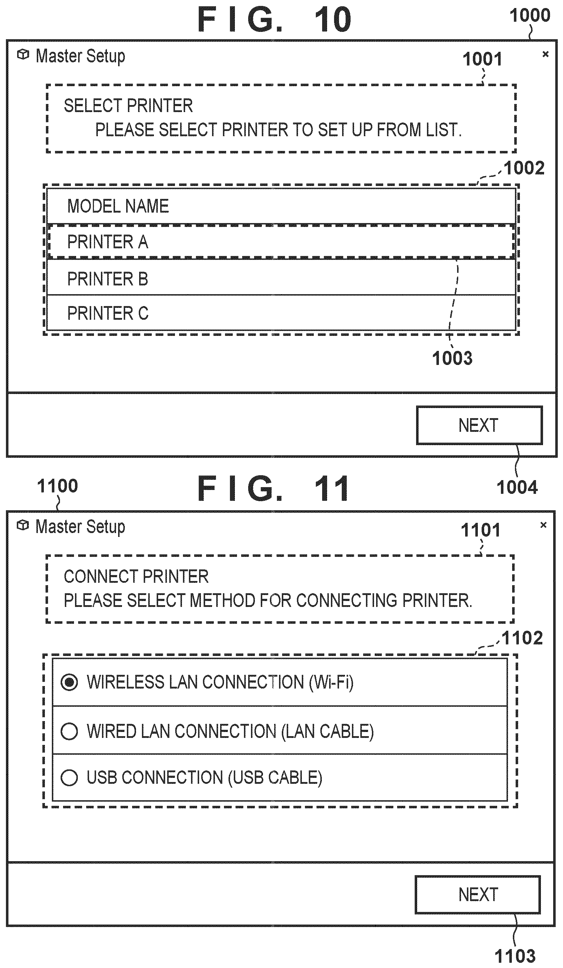

In step S405, the second application 115 displays a printer selection screen 1000 illustrated in FIG. 10 on the display unit 113. The printer selection screen 1000 includes a printer selection message 1001, a printer list display portion 1002, printer information 1003, a "Next" button 1004, and the like. The printer selection message 1001 is, for example, a message for allowing the user to select a printer 121 that can be setup. The printer list display portion 1002 displays a list of printers 121 that are the printers 121 detected in the search of step S402 and that are of models compatible with the first application 114. A printer 121 that is a model compatible with the first application 114 can be reworded as a printer 121 of a model not included in an incompatible model list for the first application 114 described later. The printer selection message 1001 instructs the user to select one piece of printer information 1003 from the printer list display portion 1002, and press the "Next" button 1004. The printer selection message 1001 may include, for example, a message indicating that a printer 121 that can be set up has been detected. The printer list display portion 1002 displays the printer information 1003. The printer information 1003 is information (such as a device name) by which it is possible to identify a printer 121. The user can select a printer 121 based on the printer information 1003. The second application 115 closes the printer selection screen 1000 based on one of pieces of the printer information 1003 being selected by the user and the "Next" button 1004 being pressed.

In step S406, the second application 115 displays an interface selection screen 1100 illustrated in FIG. 11 on the display unit 113. The interface selection screen 1100 includes an interface selection message 1101, interface selection radio buttons 1102, a "Next" button 1103, and the like. The interface selection screen 1100 is an interface for allowing a user to select a method for connecting the information processing apparatus 101 and the printer 121. The interface selection message 1101 is a message prompting a user to select a method for connecting the information processing apparatus 101 and the printer 121. The interface selection radio buttons 1102 are buttons displaying selection options of interfaces for connecting the information processing apparatus 101 and the printer 121. The user can select any of the interface selection radio buttons 1102. The second application 115 closes the interface selection screen 1100 based on any of the interface selection radio buttons 1102 being selected by the user and the "Next" button 1103 being pressed. In the present embodiment, it is assumed that any one of wireless LAN, wired LAN, and USB can be selected on the interface selection screen 1100. Thereafter, the second application 115 advances the processing to step S407.

In step S407, the second application 115 performs connection processing for establishing a connection between the information processing apparatus 101 and the printer 121. An interface selected by the user in step S406 is used to connect the information processing apparatus 101 and the printer 121. Therefore, in the present embodiment, the content of the connecting processing to be executed differs based on the interface selected by the user in step S406.

In the following, details of the connection processing executed in step S407 will be described. When the interface selected by the user in step S406 is USB cable, the second application 115 first searches on USB cables to which the information processing apparatus 101 is connected for the printer 121 selected in step S405. When the printer 121 selected in step S405 is discovered, the connection by USB between the discovered printer 121 and the information processing apparatus 101 is established, and therefore a USB connection guidance screen is not displayed and the processing proceeds to the next step. If the printer 121 selected in step S405 is not discovered, the second application 115 displays the USB connection guidance screen prompting the user to connect the printer 121 selected in step S405 and the information processing apparatus 101 by a USB cable. The USB connection guidance screen may include a button for displaying a Web manual indicating how the printer 121 and the information processing apparatus 101 are to be connected by a USB cable. Thereafter, the second application 115 again searches for the printer 121 selected in step S405 on USB cables to which the information processing apparatus 101 is connected. The second application 115 may proceed to step S413 if no printer 121 selected in step S405 is discovered even in this search.

When the interface selected by the user in step S406 is wired LAN, the second application 115 searches for the printer 121 selected in step S405 and executes an interface determination for determining whether the interface to be used in step S402 for the discovery is wired LAN. When the second application 115 determines YES in the interface determination, it searches for the printer 121 selected in step S405 on a network to which the information processing apparatus 101 is connected by the wired LAN. At this time, it is assumed that an IP address acquired when the printer 121 selected in step S405 is discovered in step S402 is used. When the printer 121 selected in step S405 is discovered, the connection between the discovered printer 121 and the information processing apparatus 101 is established, and therefore the wired LAN connection guidance screen and a wired LAN connection failure screen are not displayed and the processing proceeds to the next step. If the selected printer 121 is not discovered in step S405, the wired LAN connection failure screen indicating that the wired LAN connection has failed is displayed. The wired LAN connection failure screen may include a button for executing a re-search and a button for returning to the processing prior to step S407. When NO is determined in the interface determination, the second application 115 displays the wired LAN connection guidance screen prompting the user to connect the printer 121 selected in step S405 and the information processing apparatus 101 by wired LAN. The wired LAN connection guidance screen may include a button for displaying a Web manual indicating how the printer 121 and the information processing apparatus 101 are to be connected by wired LAN. Thereafter, the second application 115 searches for the printer 121 selected in step S405 on the network to which the information processing apparatus 101 is connected by wired LAN. The second application 115 may proceed to step S413 if no printer 121 selected in step S405 is discovered even in this search.

When the interface selected by the user in step S406 is wireless LAN, the second application 115 searches for the printer 121 selected in step S405 and executes an interface determination for determining whether the interface used in step S402 for the discovery is wireless LAN. When the second application 115 determines YES in the interface determination, it searches for the printer 121 selected in step S405 on a network to which the information processing apparatus 101 is connected by wireless LAN. At this time, it is assumed that an IP address acquired when the printer 121 selected in step S405 is discovered in step S402 is used. When the printer 121 selected in step S405 is discovered, the connection by wireless LAN between the discovered printer 121 and the information processing apparatus 101 is established, and therefore a wireless LAN connection failure screen is not displayed. Further, when the printer 121 selected in step S405 is discovered, connection information for connection with the access point is not transmitted from the information processing apparatus 101, and the processing proceeds to the next step. If the selected printer 121 is not discovered in step S405, the wireless LAN connection failure screen indicating that the wireless LAN connection has failed is displayed. The wireless LAN connection failure screen may include a button for displaying a Web manual indicating an operation method for causing the printer 121 to execute a Wi-Fi Protected Setup (WPS) and an operation method for connecting the printer 121 to an access point found by the printer 121 and selected by a user operation on the printer 121. When NO is determined in the interface determination, the second application 115 displays a guidance screen prompting the user to operate the printer 121 in the connection setting mode. Specifically, the guidance screen is, for example, a screen prompting the printer 121 to press a predetermined button for operating the printer 121 in the connection setting mode. Before the guidance screen is displayed, a screen for confirming whether or not a predetermined button is provided in the printer 121 may be displayed. When it is confirmed that a predetermined button is provided in the printer 121, a guidance screen may be displayed. When it is confirmed that the predetermined button is not provided in the printer 121, a screen for displaying a Web manual indicating an operation method for causing a printer 121 without the predetermined button to operate in the connection setting mode may be displayed. Then, the second application 115 searches for a printer 121 operating in the connection setting mode, and connects to the discovered printer 121 by wireless LAN. Note that the second application 115 stores predetermined connection information for connection with an access point connected to the information processing apparatus 101 prior to connection to the discovered printer 121 via wireless LAN. Then, the second application 115 acquires, from the printer 121, a list of access points discovered by the printer 121 through the search. Then, the second application 115 determines whether or not an access point corresponding to the predetermined connection information is included in the list. When it is determined that the access point corresponding to the predetermined connection information is included in the list, the second application 115 specifies the access point corresponding to the predetermined connection information as the access point to be connected to the printer 121. When it is determined that the access point corresponding to the predetermined connection information is not included in the list, the second application 115 displays the list and specifies an access point selected from the list as the access point to be connected to the printer 121. Then, the second application 115 transmits to the printer 121 connection information for connecting to the access point specified as the access point to be connected to the printer 121. The password included in the connection information may be acquired by the second application 115 receiving an input from the user, or may be acquired from a wireless profile held in advance by the OS of the information processing apparatus 101. Upon receiving the connection information, the printer 121 disconnects the connection with the information processing apparatus 101 and connects to the access point using the connection information. Thereafter, the second application 115 re-connects the information processing apparatus 101 to the access point corresponding to the predetermined connection information by wireless LAN. Then, the second application 115 searches for the printer 121 selected in step S405 on the network to which the information processing apparatus 101 is connected by wireless LAN. When the printer 121 selected in step S405 is discovered, the connection by wireless LAN between the discovered printer 121 and the information processing apparatus 101 is established, and the processing proceeds to the next step. If the printer 121 selected in step S405 is not discovered, the processing may proceed to step S413. If the printer 121 selected in step S405 is not discovered, a confirmation screen for confirming whether or not the setup of the printer 121 is to be continued is displayed, and when an input for continuing the setup of the printer 121 is performed on the confirmation screen, step S402 or step S405 may be returned to. If an input for not continuing to set up the printer 121 is made on the confirmation screen, the processing may proceed to step S413.

When a printer 121 detected in the search of step S402 and of a model compatible with the first application 114 is operating in the connection setting mode, the processing of step S405 and step S406 may be omitted. More specifically, there are cases where the printers that are detected in the search of step S402 and are of a model compatible with the first application 114 include a single printer 121 that is operating in the connection setting mode but not a plurality of printers 121 operating in the connection setting mode. In such cases, the processing of step S405 and step S406 is omitted, the processing proceeds to step S407, and connection processing for establishing a connection between the information processing apparatus 101 and the single printer 121 is executed. There are also cases where a plurality of printers 121 operating in the connection setting mode are included in the printers 121 that are detected in the search of step S402 and that are of a model compatible with the first application 114. In such cases, a list of the plurality of printers 121 operating in the connection setting mode that are detected in the search of step S402 and are of a model compatible with the first application 114 is displayed. This list does not include printers 121 that are detected in the search of step S402 and that are of a model compatible with the first application 114 but that are not operating in the connection setting mode. When one of the printers in the list is selected, the processing of step S405 and step S406 is omitted, and the processing proceeds to step S407, and connection processing for establishing a connection between the information processing apparatus 101 and the printer 121 selected from the list is executed. Specifically, for example, the same processing as the processing executed after the printer 121 operating in the connection setting mode is discovered among the plurality of connection processing executed when the interface selected by the user in step S406 is wireless LAN is executed.

In step S408, the second application 115 performs processing for downloading model-specific data and installing it. The model-specific data is, for example, an information file containing information for determining whether or not the second application 115 executes test printing by the printer 121, a model-specific printer driver for the printer 121 that is necessary for printing, or the like. The test print is processing of printing image data for a test print prepared in advance, and is processing for confirming whether or not there is a defect in the print result. Here, the model-specific data download of step S408 is a download that is separate from the download of step S401 of the data common to all models. This is because in the processing of step S401 the setup app 115 has not decided on the printer 121 for which to perform a setup in the processing of step S401. In step S405, the user selects the printer 121 to thereby decide the setup target printer 121, and in step S408, the model-specific data is downloaded and installed.

In step S409, the second application 115 displays a screen including a button for displaying a print queue creation screen, which is a screen for creating a print queue for the printer 121 and is a screen displayed by the OS. When this button is displayed, the OS is notified to display the print queue creation screen, and a Web manual indicating an operation method for creating a print queue in the print queue creation screen is displayed in a Web browser. The print queue creation screen displays a list of printers 121 discovered by the search executed by the OS. When the user selects one of the printers from the list, a print queue corresponding to the selected printer 121 is created by the OS. When the print queue is generated, the information processing apparatus 101 can transmit a print job to the printer 121 corresponding to the generated print queue. When the connection between the information processing apparatus 101 and the setup target printer 121 is established and the creation of a print queue corresponding to the setup target printer 121 is completed, it is considered that the setup of the printer 121 is completed. Note that the invention is not limited to the present embodiment, and the processing of step S409 may be omitted. The setup of the printer 121 may be considered to have been completed upon establishment of a connection between the information processing apparatus 101 and the setup target printer 121.

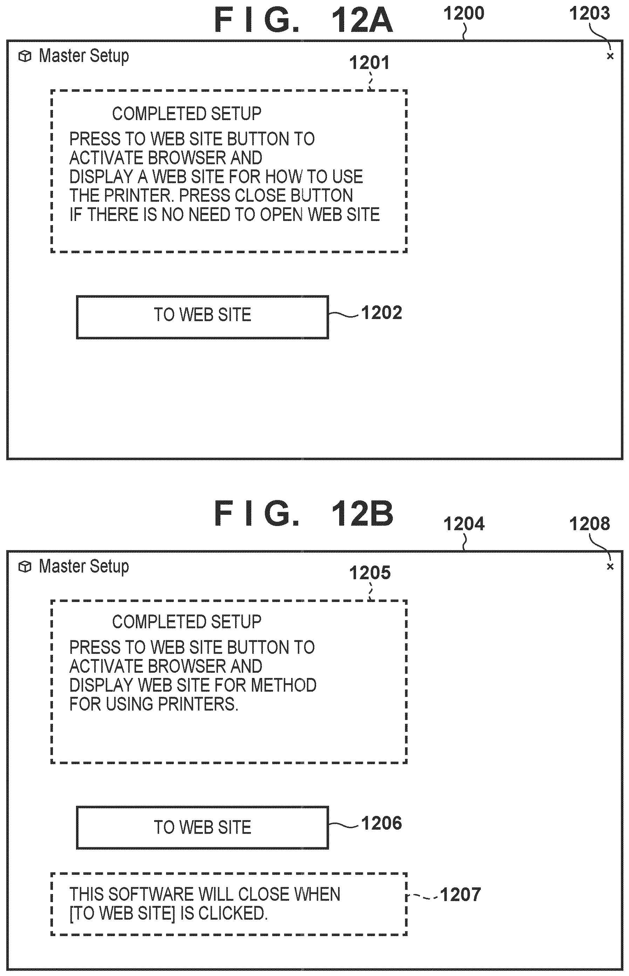

In step S410, the second application 115 displays a setup completion screen 1200 for linkage activation illustrated in FIG. 12A on the display unit 113. The setup completion screen 1200 for linkage activation includes a setup completion message 1201, a "to Web Site" button 1202, and a close button 1203. The setup completion message 1201 includes, for example, a message that informs the user that the setup has been entirely completed. The setup completion message 1201 also includes a message informing the user that when the user presses the "to Web Site" button 1202, a Web browser will be activated and methods for using the printer 121 will be displayed. In addition, the setup completion message for linkage activation includes a message for conveying to the user that the close button 1203 is to be pressed if the display of the method of using the printer 121 is not required. Thus, for example, when the method for using the printer 121 from the printer usage screen 1400 of the first application 114 illustrated in FIG. 14 has already been displayed by the user, the same display can be prevented from being performed again.

The "to Web Site" button 1202 is an interface by which it is possible to display a screen related to the printer 121. In the present embodiment, when the user presses the "to Web Site" button 1202, the second application 115 activates a Web browser and displays a Web page on the display unit 113 describing methods for using the printer 121, such as how to print or scan. It is assumed that the URL for displaying the Web page is held in advance by the second application 115. Thereafter, the second application 115 closes the setup completion screen 1200 for linkage activation.

The close button 1203 is an interface by which it is possible to close the setup completion screen 1200. When the user presses the close button 1203, the second application 115 closes the setup completion screen 1200 for linkage activation. That is, in step S410, the second application 115 performs control for displaying the close button 1203 such that it is enabled on the setup completion screen 1200 for linkage activation. That is, the second application 115 performs control to display the close button 1203 such that it can be pressed by the user. For example, there are cases where, at the time of linkage activation, the user has already opened a Web page from the printer usage screen 1400 of the first application 114, or where the user knows that the Web page can be opened, and the like. In the present embodiment, when the close button 1203 is displayed so as to be enabled, the user using the second application 115 can select whether to display the Web page by pressing the "to Web Site" button 1202 or to not display the Web page by pressing the close button 1203.

Note that a user who uses the first application 114 for the first time or a user who does not know that the Web page can be displayed from the first application 114 may not ever see the Web page. Since the close button 1203 is enabled, a user may end up pressing the close button 1203. Therefore, in step S410, the second application 115 may control whether or not the close button 1203 is displayed so as to be enabled based on the activation parameters received from the first application 114. For example, the activation parameters may include information regarding whether the user has displayed the Web page from the first application 114.

When the user operates any of the buttons on the setup completion screen 1200, in step S411, the second application 115 determines whether or not the user pressed the close button 1203 in FIG. 12A. In step S411, the second application 115 proceeds to step S412 if it is determined that the close button 1203 has not been pressed. For example, the second application 115 determines that the close button 1203 has not been pressed based on the user pressing the "to Web Site" button 1202. Meanwhile, the second application 115 proceeds to step S413 if it is determined that the close button 1203 has been pressed.

In step S412, the second application 115 displays the Web page describing methods for using the printer 121 on the display unit 113.

In step S413, the second application 115 performs end processing for linkage activation. Details of the end processing for linkage activation will be described later with reference to FIG. 8.

Step S414 indicates the end of the processing of FIG. 4. After the processing of step S413, the second application 115 ends the setup flow when the second application 115 is activated by linkage.

FIG. 5 illustrates an example of a setup flow when the second application 115 in the present embodiment is activated individually. The processing of FIG. 4 is realized, for example, by the CPU 102 loading a control program stored in a memory such as the ROM 106 into the RAM 107 and executing the control program.

Step S500 indicates the beginning of the processing of FIG. 5. In the processing of FIG. 5, the second application 115 performs setup in the case of individual activation in step S305 of FIG. 3.

Step S501 is similar processing to step S401 of FIG. 4, and therefore description thereof will be omitted.

In step S502, the second application 115 performs control to acquire agreement to the software license agreement. The manner of acquiring the agreement to the software license agreement is the same as in step S202 of FIG. 2, and therefore explanation thereof is omitted. Note that, in the setup flow for an individual activation, since the processing of step S202 is not performed by the first application 114, there are cases where the software license acquisition screen 900 is not displayed in the first application 114. That is, there are cases where agreement to the software license agreement regarding the second application 115 has not been acquired in the first application 114. Therefore, in the present embodiment, when the second application 115 is independently activated, a screen (not illustrated) similar to the software license acquisition screen 900 is displayed at the timing of step S502. As described above, in the present embodiment, since control similar to that of step S202 is executed in step S502, control for acquiring both the agreement to the software license agreement regarding the first application 114 and the agreement to the software license agreement regarding the second application 115 is executed in step S502. However, the invention is not limited to this embodiment, and, for example, configuration may be such that, in step S502, control for acquiring the agreement to the software license agreement regarding the first application 114 is not performed, and only control for acquiring the agreement to the software license agreement regarding the second application 115 is performed.

Step S503 is similar processing to step S402 of FIG. 4, and therefore description thereof will be omitted.

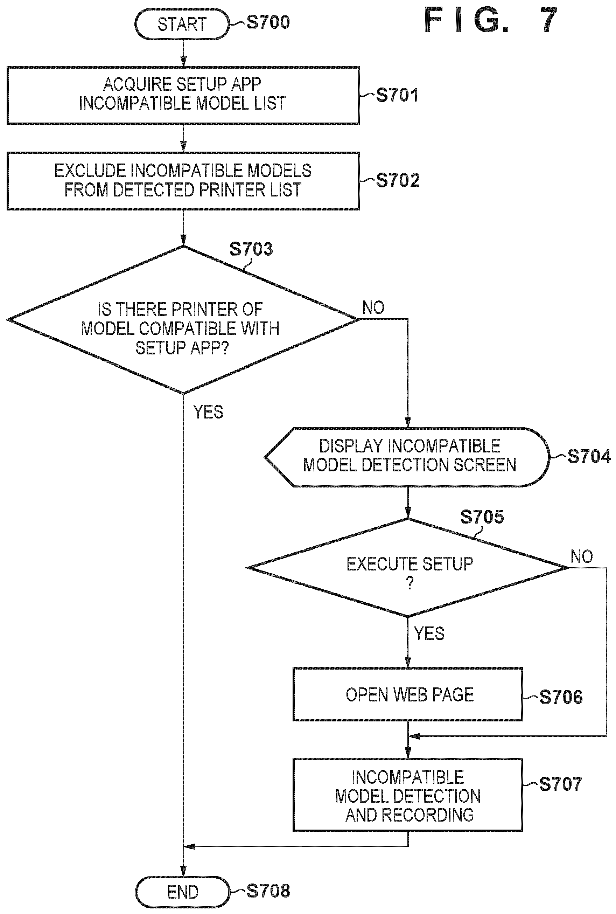

In step S504, the second application 115 performs compatible model specification processing when a printer 121 detected in step S503 is activated individually. Details of the compatible model specification processing in the case of an individual activation will be described later with reference to FIG. 7.

Steps S505 to S510 are similar processing to steps S404 to S409 of FIG. 4, and therefore description thereof will be omitted.

In step S511, the second application 115 displays a setup completion screen 1204 for individual activation illustrated in FIG. 12B on the display unit 113. The setup completion screen 1204 for individual activation includes a setup completion message 1205, a "to Web Site" button 1206, and a close message 1207, and the like. The setup completion message 1205 includes a message that informs the user that the setup has been entirely completed or that pressing the "to Web Site" button 1202 will activate a Web browser and methods for using the printer 121 will be displayed thereon. The close message 1207 is a message that notifies the user that the second application 115 will close after Web page is displayed when the "to Web Site" button is pressed.

Further, at the time of independent activation, the second application 115 performs disable control, which is a control for not executing the closing of the setup completion screen 1204 upon a user operation on a close button 1208 on the setup completion screen 1204. Specifically, the disable control is, for example, a control by which the close button 1208 is not displayed on the setup completion screen 1204. When the disable control is executed, a screen in which the close button 1208 is removed from the screen illustrated in FIG. 12B is displayed as the setup completion screen 1204. Alternatively, the disable control is, for example, control in which the closing of the setup completion screen 1204 is not executed even if a user operation is performed on the close button 1208 while the close button 1208 is displayed. In this embodiment of the disable control, the close button 1208 may be displayed to be grayed out. Even if the disable control is performed, the user can be instructed of an operation for closing the setup completion screen 1204 by displaying the close message 1207. In the setup completion screen 1204, the close message 1207, which is a message that is not displayed on the setup completion screen 1200, is displayed so as to be recognized by the user. In step S511, the second application 115 advances the processing to step S513 when the user presses the "to Web Site" button 1206.

As described above, in the present embodiment, when the second application 115 is activated based on the execution of an executable file by the user, the close button 1208 is made to be disabled from accepting instructions from the user. Meanwhile, when the second application 115 is activated from the first application 115, the close button 1208 is enabled so that it accepts an instruction from the user, as described with reference to FIG. 4. That is, the second application 115 performs display control for determining whether the close button 1208 is disabled from accepting an instruction from the user or is enabled so as to accept an instruction as described with reference to FIG. 4, in the cases of individual activation and linkage activation. In the above description, an embodiment is described in which the disable control is executed when the second application 115 is independently activated, and the disable control is not executed when the second application 115 is activated by linkage, but the invention is not limited to this embodiment. An embodiment in which the disable control is not executed when the second application 115 is activated independently or when the second application 115 is activated by linkage may be employed. That is, the same screen (for example, the screen illustrated in FIG. 12A) may be displayed as the setup completion screen both when the second application 115 is independently activated and when the second application 115 is activated by linkage.

The processing of step S512 is similar to the processing of step S412 of FIG. 4, and therefore description thereof will be omitted.

Step S513 indicates the end of the processing of FIG. 5. The second application 115 ends the setup flow processing in the case of individual activation. That is, the second application 115 ends the operation of the second application based on the Web page being displayed in step S512. Step S513 is, in other words, processing for ending the operation of the second application 115.

FIG. 6 illustrates an example of compatible model specification processing when the second application 115 in the present embodiment is activated by linkage. The processing of FIG. 6 is realized, for example, by the CPU 102 loading a control program stored in a memory such as the ROM 106 into the RAM 107 and executing the control program.

Step S600 indicates the beginning of the processing of FIG. 6. In the processing of FIG. 6, the second application 115 performs compatible model specification processing for confirming whether at least one printer 121 of a model compatible with the first application 114 is present among the one or more printers 121 detected in step S402 of FIG. 4.

In step S601, the second application 115 acquires an incompatible model list which is a list of printers 121 that are models that are incompatible with the first application 114. The method of acquiring the incompatible model list may be a method of acquiring a list stored in advance as fixed values in the second application 115 or a method of acquiring the list from an external server (not illustrated) via the Internet. The incompatible model list is a list of models that are incompatible with the first application. For example, a list of models having an OS that is incompatible with the first application 114, models that are incompatible with a printer driver of the first application 114, models of a standard that is incompatible with the first application 114, and models of a communication specification that is incompatible with the first application 114, or the like, may be used. Further, it is assumed that the incompatible model list for the first application 114 is different from the incompatible model list for the second application 115. More specifically, it is assumed that the incompatible model list for the first application 114 includes all models described in the incompatible model list for the second application 115, for example. Specifically, it is assumed that the incompatible model list for the first application 114 is a list of a broader scope that the incompatible model list for the second application 115. In other words, it can be said that the range of printers 121 that are the target of setup in the case of linkage activation is narrower than the range of printers 121 that are the target of setup in the case of individual activation. However, the invention is not limited to this embodiment, and for example, the incompatible model list for the first application 114 may include some models described in the incompatible model list for the second application 115. Further, an embodiment in which the incompatible model list for the first application 114 does not include models of the incompatible model list for the second application 115 may be employed, for example. As described above, the first application 114 can execute a function of transmitting a print job and a function of transmitting a scan job to the printer 121 upon the respective printer function buttons 1401 being pressed. A model of a printer 121 to which the first application 114 can transmit various jobs is a model compatible with the first application 114. In other words, a model of a printer 121 to which the first application 114 cannot transmit various jobs is a model that is incompatible with the first application 114.

In step S601, in the case of an embodiment in which the incompatible model list for the first application 114 does not include models of the incompatible model list for the second application 115, the second application 115 also acquires the incompatible model list for the second application 115. The second application creates a list of incompatible models in which the list of incompatible models for the first application 114 and the list of incompatible models for the second application 115 are combined, and uses the list for the subsequent processing. In this way, when the second application 115 is activated by linkage, the second application 115 acquires a list of printers 121 of models that are incompatible with the first application 114. Thus, even when the user activates the second application 115 from the first application 114 and performs a setup of a printer 121, a printer 121 that can be used from the first application 114 can be set up in the processing of FIG. 4.

In step S602, the second application 115 excludes printers 121 included in the incompatible model list acquired in step S601 from the list of the one or more printers 121 detected in the printer search of step S402 of FIG. 4. In the following explanation, a printer detected in the printer search processing of step S402 is referred to as a detected printer. The list of detected printers is referred to as the detected printer list. For example, assume that the detected printer list includes a printer 121 of a predetermined model. Also, assume that the incompatible model list does not include a printer 121 of a predetermined model. In this case, the second application 115 does not exclude the printer 121 of the predetermined model from the detected printer list.

In the present embodiment, an example in which a list of incompatible models is acquired has been described, but the present invention is not limited thereto. For example, a method may be employed in which a list (compatible model list) of printers 121 of models compatible with the first application 114 is acquired, and printers 121 not included in the compatible model list are excluded from the detected printer list. Alternatively, a method of selecting a printer 121 included in the compatible model list from the detected printer list may be used.

In step S603, the second application 115 confirms the detected printer list after excluding incompatible models in step S602, and determines whether or not there is a printer 121 of a model compatible with the first application 114. A printer of a model compatible with the first application 114 is a printer 121 that is not included in the incompatible model list for the first application 114 among the printers 121 in the detected printer list. When the second application 115 determines that a printer 121 is of a model that is compatible with the first application 114, it stores in the RAM 107 information indicating that at least one printer 121 of a model compatible with the first application 114 is detected, proceeds to step S608, and ends the processing of FIG. 6. Meanwhile, the second application 115 proceeds to step S604 if it is determined that there is not even one printer 121 of a model compatible with the first application 114.

In step S604, the second application 115 displays an incompatible model detection screen 1300 illustrated in FIG. 13 on the display unit 113. The incompatible model detection screen 1300 includes an incompatible model detection message 1301, an "OK" button 1302, a "Cancel" button 1303, and the like. The incompatible model detection message 1301 includes a message conveying to the user that a printer 121 of a model that is incompatible with the first application 114 has been detected, and that the user should press the "OK" button 1302 to set that printer 121 up. A printer 121 of a model that is incompatible with the first application 114 is a printer 121 included in the incompatible model list among the detected printers. When the user presses the "OK" button 1302 or the "Cancel" button 1303, the incompatible model detection screen 1300 can be closed.

In step S605, the second application 115 determines whether to execute a setup for a printer 121 that is a model that is incompatible with the first application 114. If the second application 115 determines to perform the setup, it proceeds to step S606. Meanwhile, if the second application 115 determines to not perform the setup, it proceeds to step S607. Specifically, the second application 115 determines to execute the setup when the user presses the "OK" button 1302 on the incompatible model detection screen 1300. Meanwhile, the second application 115 determines not to execute the setup when the user presses the "Cancel" button 1303 on the incompatible model detection screen 1300 in step S604. If the second application 115 determines to not perform the setup, it may proceed to step S406. In this embodiment, a printer 121 that is not discovered in step S402 search is set up in the processing from step S406.

In step S606, the second application 115 displays, on the display unit 113, a Web page (not illustrated) for activating an application for setting up a printer 121 displayed on the incompatible model detection screen 1300. When a printer 121 displayed on the incompatible model detection screen 1300 is included in the incompatible model list for the first application 114 but is not included in the incompatible model list for the second application 115, the application for setting up the printer 121 displayed on the incompatible model detection screen 1300 is the second application 115. The above Web page is, for example, a Web page for installing the second application 115, and an executable file of the second application 115 is downloaded via the Web page, so that the second application 115 is independently activated. As a result, the setup for independent activation illustrated in step S305 is executed, so that the setup of a printer 121 displayed on the incompatible model detection screen 1300 is executed. When a printer 121 displayed on the incompatible model detection screen 1300 is included in the incompatible model list for the first application 114 but is not included in the incompatible model list for the second application 115, in step S606, the second application 115 may directly execute the processing of step S305 without displaying the above described Web page. Also, when a printer 121 displayed on the incompatible model detection screen 1300 is included in the incompatible model list for the first application 114 and is included in the incompatible model list for the second application 115, the application for performing the setup of a printer 121 displayed on the incompatible model detection screen 1300 is a third application. The third application, like the second application, is not an application capable of performing setup for a plurality of models, but is assumed to be an application capable of performing setup only for a single model. Further, a printer 121 included in the incompatible model list for the first application 114 and the incompatible model list for the second application 115 is, for example, a printer 121 of a model older than a printer 121 that is not included in the incompatible model list for the first application 114 or the incompatible model list for the second application 115.

In step S607, the second application 115 records in the RAM 107 information indicating that not even one printer 121 of a model compatible with the first application 115 was detected.

Step S608 indicates the end of the processing of FIG. 6. That is, in step S608, the second application 115 ends the compatible model specification processing in the case of the second application 115 being activated by linkage, and proceeds to step S404.

In the above description, an embodiment in which the processing of step S604 to step S606 is executed in a case where it is determined in step S603 that a printer 121 of a model compatible with the first application 114 is not present has been described, but the invention is not limited to this embodiment. An embodiment in which the processing proceeds to step S607 without executing processing of step S604 to step S606 in a case where it is determined in step S603 that a printer 121 of a model compatible with the first application 114 is not present may be employed.

FIG. 7 illustrates an example of compatible model specification processing when the second application 115 in the present embodiment is activated individually. The processing of FIG. 7 is realized, for example, by the CPU 102 loading a control program stored in a memory such as the ROM 106 into the RAM 107 and executing the control program.

Step S700 indicates the beginning of the processing of FIG. 7. In the processing of FIG. 7, the second application 115 performs incompatible model detection to confirm whether at least one printer 121 of a model compatible with the second application 115 is present in the detected printers 121 in previously-described step S503 of FIG. 5.

In step S701, the second application 115 acquires an incompatible model list which is a list of printers 121 that are models that are incompatible with the second application 115. The method of acquiring the incompatible model list for the second application 115 may be a method of acquiring a list stored as fixed values in the second application 115 or a method of acquiring the list from an external server (not illustrated) via the Internet. Further, the incompatible model list for the second application 115 is a list of models that are incompatible with the second application 115. The list of incompatible models is, for example, a list as described in step S601, and thus description thereof will be omitted.

In step S702, the second application 115 excludes printers 121 included in the incompatible model list acquired in step S701 from the list of one or more printers 121 detected in the printer search of step S402 of FIG. 4.

In step S703, the second application 115 confirms the detected printer list after excluding incompatible models in step S702, and determines whether or not there is a printer 121 of a model compatible with the second application 115. A printer of a model compatible with the second application 115 is a printer 121 that is not included in the incompatible model list for the second application 115 among the printers 121 in the detected printer list. When the second application 115 determines that a printer 121 is of a model that is compatible with the second application 115, it stores in the RAM 107 information indicating that at least one printer 121 of a model compatible with the second application 115 is detected, proceeds to step S708, and ends the processing of FIG. 7. Meanwhile, the second application 115 proceeds to step S704 if it is determined that there is not even one printer 121 of a model compatible with the second application 115.

In step S704, the second application 115 displays the incompatible model detection screen 1300 illustrated in FIG. 13 on the display unit 113. The incompatible model detection screen 1300 includes the incompatible model detection message 1301, the "OK" button 1302, the "Cancel" button 1303, and the like. The incompatible model detection message 1301 includes a message conveying to the user that a printer 121 of a model that is incompatible with the second application 115 has been detected, and that the user should press the "OK" button 1302 to set that printer 121 up. The printer 121 of the model that is incompatible with the second application 115 is a printer 121 included in the incompatible model list among the detected printers. When the user presses the "OK" button 1302 or the "Cancel" button 1303, the incompatible model detection screen 1300 can be closed.

In step S705, the second application 115 determines whether to execute a setup for a printer 121 that is a model that is incompatible with the second application 115. If the second application 115 determines to perform the setup, it proceeds to step S706. Meanwhile, if the second application 115 determines to not perform the setup, it proceeds to step S707. Specifically, the second application 115 determines to execute the setup when the user presses the "OK" button 1302 on the incompatible model detection screen 1300. Meanwhile, the second application 115 determines not to execute the setup when the user presses the "Cancel" button 1303 on the incompatible model detection screen 1300 in step S705.

In step S706, the second application 115 displays, on the display unit 113, a Web page (not illustrated) for activating an application for setting up a printer 121 displayed on the incompatible model detection screen 1300. As described above, in the present embodiment, a printer 121 included in the incompatible model list for the second application 115 is also included in the incompatible model list for the first application 114. Accordingly, a printer 121 displayed on the incompatible model detection screen 1300 is included in the incompatible model list for the first application 114 and is included in the incompatible model list for the second application 115. Therefore, the application for setting up a printer 121 displayed on the incompatible model detection screen 1300 is the third application.

In step S707, the second application 115 records in the RAM 107 information indicating that not even one printer 121 of a model compatible with the second application 115 was detected.

Step S708 indicates the end of the processing of FIG. 7. That is, in step S708, the second application 115 ends the compatible model specification processing when the second application 115 is activated independently, and proceeds to step S505.

In the above description, an embodiment in which the processing of step S704 to step S706 is executed in a case where it is determined in step S703 that a printer 121 of a model compatible with the second application 115 is not present has been described, but the invention is not limited to this embodiment. An embodiment in which the processing proceeds to step S707 without executing processing of step S704 to step S706 in a case where it is determined in step S703 that a printer 121 of a model compatible with the second application 115 is not present may be employed.

FIG. 8 illustrates an example of a flow of processing for closing the second application 115 when the second application 115 in the present embodiment is activated by linkage. The processing of FIG. 8 is realized, for example, by the CPU 102 loading a control program stored in a memory such as the ROM 106 into the RAM 107 and executing the control program.

Step S800 indicates the beginning of the processing of FIG. 8. In the processing of FIG. 8, in step S413 of FIG. 4 described above, the second application 115 performs the processing of transmitting the setup result to the first application 114 as the processing performed when the application is ended.

In step S801, the second application 115 determines whether the first application 114 is activated. Meanwhile, the second application 115 proceeds to step S802 if it is determined that the first application 114 is not activated. Meanwhile, the second application 115 proceeds to step S803 if it is determined that the first application 114 is activated. The second application 115 may determine whether or not the first application 114 is activated by instructing the OS using, for example, an Application Programming Interface (API).

In step S802, the second application 115 activates the first application 114. The CPU 102 then advances the processing to step S803.

In step S803, the second application 115 transmits the setup result to the first application 114. Specifically, as a result of the processing for setting up the printer 121 from step S401 to step S410 in FIG. 4, a plurality of pieces of information including information as to the success/failure of the setup processing and the information for identifying the setup target printer 121 are transmitted to the first application 114. Configuration may be such that in a case where the setup of the printer 121 has failed, the information for identifying the printer 121 is not transmitted. The information as to the success/failure of the setup processing is information indicating whether or not the second application 115 has successfully set up the printer 121. The case where the setup of the printer 121 is successful is, for example, a case where a connection between the information processing apparatus 101 and the printer 121 is established in the connection processing of step S407, and then the processing of FIG. 8 is started by the close button 1203 on the setup completion screen being pressed. The case where the setting up of the printer 121 fails is, for example, a case where the processing of FIG. 8 is started because the printer 121 selected in step S405 has not been discovered even though the interface selected by the user in step S406 is wireless LAN and the connection information has been transmitted to the printer 121. Further, for example, the processing of FIG. 8 is started when the interface selected by the user in step S406 is wired LAN or USB, and the printer 121 selected in step S405 is not discovered even though the various guidance screens described above are displayed. As an example of the information as to the success/failure of the setup processing included in the setup result, there is a method of expressing the success/failure information by character string information such as "SETUP_SUCCESS" when each process in step S401 to step S410 illustrated in FIG. 4 is successful, and "SETUP_FAIL" otherwise. Further, an example of the information for identifying the printer 121 included in the setup result is identification information that can be acquired when a printer 121 is detected in printer search processing in step S402 or in processing for connecting to the printer 121 in step S408. The identification information is, for example, a model name, a MAC address, a serial number, or the like of the printer 121. There are cases where the set up printer 121 cannot be specified as a single printer by independent identification information, such as when a plurality of printers 121 having the same model name are detected. Thus, the second application 115 may transmit a setup result including the plurality of pieces of identification information to the first application 114.

An example is given below of a method by which, in step S803, the second application 115 transmits the setup result to the first application 114. For example, it is possible to employ a method in which the first application 114 provided in the ROM 106 stores a setup result as the above-described character string information in a file that can be referred to and the first application 114 refers to the file. Alternatively, it is possible to employ a method in which the second application 115 assigns an activation instruction when the first application 114 is activated as a command line argument. Alternatively, it is possible to employ a method of transmission by inter-process communication with the active first application 114, or the like.

The series of processing of step S801 to step S803 may use an application activation unit (also referred to as a "deep link") using a "URL scheme" (sometimes referred to as a "URI scheme" or a "custom URL"). Hereinafter, an example in which such a method is used in the present embodiment will be described. For example, the second application 115 generates the URL "portal://SETUP_SUCCESS/Param?PRINTERNAME=AAA&SERIAL=1234567 8" which adds a character string indicating the setup result to be transmitted to the first application 114 after the URL scheme "portal://" indicating the first application 114, and instructs the OS of the information processing apparatus 101 to execute processing for opening the URL. In the OS, processing for activating the first application 114 is registered as an operation corresponding to the URL scheme "portal://", and the OS activates the first application 114 by processing for opening the URL. The first application 114 acquires, as parameters, the character string "SETUP_SUCCESS/Param?PRINTERNAME=AAA&SERIAL=12345678" following URL scheme "portal://" indicating the first application 114. The first application 114 acquires the setup result "SETUP_SUCCESS" included in the character string, and determines that the setup was successful. The first application 114 acquires the identification information "Param?PRINTERNAME=AAA&SERIAL=12345678" included in the character string, and determines that the model name of the setup printer 121 is "AAA" and the serial number is "12345678". When the first application 114 is already activated, the above-described parameters are transmitted to the activated first application 114.

In step S804, the second application 115 performs processing for closing itself. Specifically, the second application 115 closes all screens displayed by the second application 115, and ends its process.

Step S805 indicates the end of the processing of FIG. 8. After completing the processing of step S804, the second application 115 ends the flow of processing for closing the second application 115 when it is activated by linkage.

By virtue of the present embodiment, a configuration in which control for determining whether to display the screen of the license agreement based on the activation source of the second application 115 has been described above. When the second application 115 is activated from the first application 114, the same screen as the screen of the license agreement displayed in the first application 114 can be prevented from being displayed again based on the activation of the second application 115. This prevents the user from being required to agree to the same license agreement he or she agreed to in the first application. Therefore, it is possible to improve usability and shorten setup time.

Also, by virtue of the present embodiment, the display of the setup completion screen is controlled so that a display for receiving an instruction as to whether or not to display the screen related to methods of using the printer 121 or the like is made different based on the activation source of the second application 115. In a case where the second application 115 is a linkage activation, an interface display that does not display a screen related to methods of using the printer 121 or the like is displayed on the setup completion screen. That is, in the case where the second application 115 is activated by linkage, the user can close the setup completion screen by pressing the close button 1203 without displaying a screen related to methods of using the printer 121 or the like. Therefore, even when the first application 114 and the second application 115 can operate independently of each other, convenience of the user can be improved.

Also, by virtue of the present embodiment, a configuration in which, based on the activation source of the second application 115, the second application 115 performs control to change the models of the setup target printer 121 is described. Thus, when the second application 115 is activated from the first application 114, the second application 115 can perform a set up with models of printers 121 that are compatible with the first application 114 as targets. Therefore, even when the first application 114 and the second application 115 can operate independently of each other, convenience of the user can be improved.

In the present embodiment, a screen of a software license agreement has been described as an example of a screen to be displayed based on the activation of the first application 114 and a screen whose display is controlled based on the source of activation of the second application 115, but the invention is not limited to this. The screen to be displayed based on the activation of the first application 114 and the screen whose display is controlled based on the source of activation of the second application 115 may be, for example, a screen for requesting the user to agree on a predetermined usage rule, confirmation item, handling of personal information, or the like. Alternatively, a screen such as an advertisement related to the printer 121 or the like, a screen for requesting an input from a user such as a login screen, or a screen for notifying the user of a predetermined notification or the like are also possible.

In the present embodiment, an example in which a Web page related to methods for using the printer 121 is displayed from the setup completion screen 1200 or the setup completion screen 1204 displayed by the second application 115 is described, but the invention is not limited thereto. The screen displayed from the setup completion screen of the second application 115 may be, for example, a screen related to methods for using the first application 114 or the printer 121, an introduction screen that introduces a product of the provider of the first application 114, or an advertisement screen related to the first application 114 or the printer 121. These screens are not limited to being displayed by a Web browser, and may be displayed on a screen of the first application 114.

### <Other Embodiments>

Needless to say, the purpose of the present disclosure is also achieved by supplying a system or an apparatus with a recording medium in which program code of software for realizing the functions of the above-described embodiments is recorded, and a computer (or CPU or MPU) of the system or apparatus reading and executing the program code stored in the recording medium. In such cases, the program code itself, read from a storage medium, realizes the functions of the above-described embodiments, and the storage medium storing the program code constitutes the present invention.

As the storage medium for supplying the program code, for example, a flexible disk, a hard disk, an optical disk, a magneto-optical disk, a CD-ROM, a CD-R, a magnetic tape, a nonvolatile memory card, a ROM, a DVD, or the like can be used.

Further, it is needless to say that not only the execution of program code read by a computer realizing the functions of the above-described embodiments, but also cases where, based on instructions of program code, an operating system or the like running on a computer performs some or all of the actual processing, and by that processing, the functions of the above-described embodiments are realized are included in the present invention.

Further, it is needless to say that cases in which, after program code read from a storage medium is written into a memory provided in a function expansion board inserted into a computer or a function expansion unit connected to the computer, a CPU or the like provided in the function expansion board or the function expansion unit performs some or all of the actual processing based on instructions of the program code, and by that processing, the functions of the above-described embodiments are realized are included in the present invention.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments.

## Claims

1. A first program (114) and a second program (115) different from the first program (114) configured to cause a computer to:
based on the second program (115) having activated by executing an activation instruction according to the first program (114), not execute, according to the second program (115), second processing for acquiring, from a user, the agreement to a software license agreement regarding the second program (115), and,
based on the second program (115) having activated without executing the activation instruction according to the first program (114), execute, according to the second program (115), the second processing;
execute, according to the first program (114), first processing for acquiring, from a user, the agreement to a software license agreement regarding the second program (115); and
activate, from the first program (114), the second program (115) by executing an activation instruction according to the first program (114) after the agreement to the software license agreement regarding the second program (115) is acquired by the first processing being executed.

2. The first program (114) and the second program (115) according to claim 1, wherein
the first processing further includes processing for acquiring, from a user, agreement to a software license agreement regarding the first program (114).

3. The first program (114) and the second program (115) according to claim 1 or 2, wherein
the second processing further includes processing for acquiring, from a user, agreement to a software license agreement regarding the first program (114).

4. The first program (114) and the second program (115) according to any one of claims 1 to 3, wherein the software license agreement is an end-user license agreement (EULA).

5. The first program (114) and the second program (115) according to any one of claims 1 to 3, wherein,
based on the second program (115) having activated by the executing activation instruction according to the first program (114), the second processing is not executed according to the second program (115) and third processing is executed according to the second program (115), and
based on the second program (115) having activated without the executing activation instruction according to the first program (114), the second processing and the third processing are executed according to the second program (115).

6. The first program (114) and the second program (115) according to claim 5, wherein,
the third processing includes search processing for searching for one or more apparatuses belonging to the same network as a network that an information processing apparatus (101) belongs to and display processing for displaying one or more apparatuses discovered by the search processing.

7. The first program (114) and the second program (115) according to claim 6, further configured to cause the computer to:
execute, according to the second program (115), processing for performing control such that, in a case where the second program (115) has activated by the activation instruction executing according to the first program (114), one or more apparatuses which are of a model that is not compatible with the first program (114), among one or more apparatuses belonging to the same network as a network that the information processing apparatus (101) belongs to, are not displayed by the display processing, and one or more apparatuses of a model that is compatible with the first program (114), among the one or more apparatuses belonging to the same network as the network that the information processing apparatus (101) belongs to, are displayed by the display processing, and
execute, according to the second program (115), processing for performing control such that, in a case where the second program (115) has activated without the executing activation instruction according to the first program (114), one or more apparatuses which are of a model that is not compatible with the second program (115), among one or more apparatuses belonging to the same network as a network that the information processing apparatus (101) belongs to, are not displayed by the display processing, and one or more apparatuses of a model that is compatible with the second program (115), among the one or more apparatuses belonging to the same network as the network that the information processing apparatus (101) belongs to, are displayed by the display processing,
wherein a range of models that are compatible with the first program (114) and a range of models that are compatible with the second program (115) are different.

8. The first program (114) and the second program (115) according to claim 6 or 7, further configured to cause the computer to:
execute, according to the second program (115), processing related to a connection between an apparatus selected by a user among the one or more apparatuses displayed by the display processing and the information processing apparatus (101).

9. The first program (114) and the second program (115) according to any one of claims 6 to 8, wherein the one or more apparatuses displayed by the display processing are printers.

10. The first program (114) and the second program (115) according to any one of claims 5 to 9, further configured to cause the computer to:
in a case where the second program (115) activates by executing the activation instruction according to the first program (114) and the third processing has been completed according to the second program (115), displaying a first screen including a first button and a second button, and
in a case where the second program (115) activates without executing the activation instruction according to the first program (114) and the third processing has been completed according to the second program (115), displaying a second screen including the first button but not including the second button,
wherein based on the first button being operated, the processing for displaying the predetermined screen and the processing for closing the second program (115) is executed according to the second program (115), and
based on the second button being operated, the processing for closing the second program (115) is executed according to the second program (115) without the processing for displaying the predetermined screen being executed according to the second program (115).

11. The first program (114) and the second program (115) according to claim 10, wherein
the predetermined screen is at least one among a screen related to a method for using the first program (114), a screen related to a method for using an apparatus external to the information processing apparatus (101), a screen for introducing a product that a provider of the first program (114) provides, a screen of an advertisement related to the first program (114), and a screen of an advertisement related to an apparatus external to the information processing apparatus (101), and
the predetermined screen is a screen to be displayed by a Web browser or the first program (114).

12. The first program (114) and the second program (115) according to any one of claims 1 to 11, wherein the first program (114) and the second program (115) are application programs.

13. The first program (114) and the second program (115) according to any one of claims 1 to 12, further configured to cause the computer to:
transmit, according to the first program (114), at least one among a print job for causing an apparatus external to the information processing apparatus (101) to execute printing and a scan job for causing an apparatus external to the information processing apparatus (101) to execute scanning.

14. An information processing apparatus (101) having a first program (114) and a second program (115), the information processing apparatus (101) comprising:
at least one memory and at least one processor which function as:
first execution means configured to execute, according to the first program (114), first processing for acquiring, from a user, agreement to a software license agreement regarding the second program (115);
activation means configured to activate, from the first program (114), the second program (115) by executing an activation instruction according to the first program (114) after the agreement to the software license agreement regarding the second program (115) is acquired by the first processing being executed; and
second execution means configured to, based on the second program (115) having activated by executing the activation instruction according to the first program (114), not execute, according to the second program (115), second processing for acquiring, from a user, the agreement to the software license agreement regarding the second program (115), and, based on the second program (115) having activated without executing the activation instruction by the first program (114), execute, according to the second program (115), the second processing.

15. A method for controlling an information processing apparatus (101) having a first program (114) and a second program (115),
the control method comprising:
executing, according to the first program (114), first processing for acquiring, from a user, agreement to a software license agreement regarding the second program (115);
activating, from the first program (114), the second program (115) by executing an activation instruction according to the first program (114) after the agreement to the software license agreement regarding the second program (115) is acquired by the first processing being executed; and
based on the second program (115) having activated by executing the activation instruction according to the first program (114), not executing, according to the second program (115), second processing for acquiring, from a user, the agreement to the software license agreement regarding the second program (115), and, based on the second program (115) having activated without executing the activation instruction according to the first program (114), executing, according to the second program (115), the second processing.

## Patentansprüche

1. Ein erstes Programm (114) und ein zweites Programm (115), das sich von dem ersten Programm (114) unterscheidet, die dazu eingerichtet sind, einen Computer zu veranlassen:
Basierend darauf, dass das zweite Programm (115) durch Ausführen einer Aktivierungsanweisung gemäß dem ersten Programm (114) aktiviert wurde, gemäß dem zweiten Programm (115) eine zweite Verarbeitung zum Einholen der Zustimmung zu einer Softwarelizenzvereinbarung bezüglich des zweiten Programms (115) von einem Benutzer nicht auszuführen, und
basierend darauf, dass das zweite Programm (115) ohne Ausführen der Aktivierungsanweisung gemäß dem ersten Programm (114) aktiviert wurde, gemäß dem zweiten Programm (115) die zweite Verarbeitung auszuführen;
gemäß dem ersten Programm (114) eine erste Verarbeitung zum Einholen der Zustimmung zu einer Softwarelizenzvereinbarung bezüglich des zweiten Programms (115) von einem Benutzer auszuführen; und
von dem ersten Programm (114) aus das zweite Programm (115) durch Ausführen einer Aktivierungsanweisung gemäß dem ersten Programm (114) zu aktivieren, nachdem die Zustimmung zur Softwarelizenzvereinbarung bezüglich des zweiten Programms (115) durch Ausführen der ersten Verarbeitung eingeholt wurde.

2. Das erste Programm (114) und das zweite Programm (115) nach Anspruch 1, wobei
die erste Verarbeitung ferner eine Verarbeitung zum Einholen einer Zustimmung zu einer Softwarelizenzvereinbarung bezüglich des ersten Programms (114) von einem Benutzer enthält.

3. Das erste Programm (114) und das zweite Programm (115) nach Anspruch 1 oder 2, wobei
die zweite Verarbeitung ferner eine Verarbeitung zum Einholen der Zustimmung zu einer Softwarelizenzvereinbarung bezüglich des ersten Programms (114) von einem Benutzer enthält.

4. Das erste Programm (114) und das zweite Programm (115) nach einem der Ansprüche 1 bis 3, wobei die Softwarelizenzvereinbarung eine Endbenutzer-Lizenzvereinbarung (EULA) ist.

5. Das erste Programm (114) und das zweite Programm (115) nach einem der Ansprüche 1 bis 3, wobei
basierend darauf, dass das zweite Programm (115) durch Ausführen einer Aktivierungsanweisung gemäß dem ersten Programm (114) aktiviert wurde, die zweite Verarbeitung gemäß dem zweiten Programm (115) nicht ausgeführt wird und eine dritte Verarbeitung gemäß dem zweiten Programm (115) ausgeführt wird, und
basierend darauf, dass das zweite Programm (115) ohne das Ausführen der Aktivierungsanweisung gemäß dem ersten Programm (114) aktiviert wurde, die zweite Verarbeitung und die dritte Verarbeitung gemäß dem zweiten Programm (115) ausgeführt werden.

6. Das erste Programm (114) und das zweite Programm (115) nach Anspruch 5, wobei
die dritte Verarbeitung eine Suchverarbeitung zum Suchen nach einer oder mehreren Vorrichtungen, die zu demselben Netzwerk gehören wie das Netzwerk, zu dem eine Informationsverarbeitungsvorrichtung (101) gehört, und eine Anzeigeverarbeitung zum Anzeigen einer oder mehrerer durch die Suchverarbeitung entdeckter Vorrichtungen enthält.

7. Das erste Programm (114) und das zweite Programm (115) nach Anspruch 6, ferner dazu eingerichtet, den Computer zu veranlassen:
gemäß dem zweiten Programm (115) eine Verarbeitung zum Durchführen einer Steuerung auszuführen, so dass in einem Fall, in dem das zweite Programm (115) durch Ausführen der Aktivierungsanweisung gemäß dem ersten Programm (114) aktiviert wurde, eine oder mehrere Vorrichtungen, die zu einem Modell gehören, das nicht mit dem ersten Programm (114) kompatibel ist, unter einer oder mehreren Vorrichtungen, die zu demselben Netzwerk gehören wie ein Netzwerk, zu dem die Informationsverarbeitungsvorrichtung (101) gehört, durch die Anzeigeverarbeitung nicht angezeigt werden, und eine oder mehrere Vorrichtungen eines Modells, das mit dem ersten Programm (114) kompatibel ist, unter den einen oder mehreren Vorrichtungen, die zu demselben Netzwerk gehören wie das Netzwerk, zu dem die Informationsverarbeitungsvorrichtung (101) gehört, durch die Anzeigeverarbeitung angezeigt werden, und
gemäß dem zweiten Programm (115) eine Verarbeitung zum Durchführen einer Steuerung auszuführen, so dass in einem Fall, in dem das zweite Programm (115) ohne das Ausführen der Aktivierungsanweisung gemäß dem ersten Programm (114) aktiviert wurde, eine oder mehrere Vorrichtungen, die zu einem Modell gehören, das nicht mit dem zweiten Programm (115) kompatibel ist, unter einer oder mehreren Vorrichtungen, die zu demselben Netzwerk gehören wie ein Netzwerk, zu dem die Informationsverarbeitungsvorrichtung (101) gehört, durch die Anzeigeverarbeitung nicht angezeigt werden, und eine oder mehrere Vorrichtungen eines Modells, das mit dem zweiten Programm (115) kompatibel ist, unter der einen oder den mehreren Vorrichtungen, die zu demselben Netzwerk gehören wie das Netzwerk, zu dem die Informationsverarbeitungsvorrichtung (101) gehört, durch die Anzeigeverarbeitung angezeigt werden,
wobei ein Bereich von Modellen, die mit dem ersten Programm (114) kompatibel sind, und ein Bereich von Modellen, die mit dem zweiten Programm (115) kompatibel sind, unterschiedlich sind.

8. Das erste Programm (114) und das zweite Programm (115) nach Anspruch 6 oder 7, ferner dazu eingerichtet, den Computer zu veranlassen:
gemäß dem zweiten Programm (115) eine Verarbeitung in Bezug auf eine Verbindung zwischen einer Vorrichtung, die von einem Benutzer unter der einen oder den mehreren Vorrichtungen ausgewählt wird, die durch die Anzeigeverarbeitung angezeigt werden, und der Informationsverarbeitungsvorrichtung (101) auszuführen.

9. Das erste Programm (114) und das zweite Programm (115) nach einem der Ansprüche 6 bis 8, wobei die eine oder die mehreren Vorrichtungen, die durch die Anzeigeverarbeitung angezeigt werden, Drucker sind.

10. Das erste Programm (114) und das zweite Programm (115) nach einem der Ansprüche 5 bis 9, ferner dazu eingerichtet, den Computer zu veranlassen:
in einem Fall, in dem das zweite Programm (115) durch Ausführen der Aktivierungsanweisung gemäß dem ersten Programm (114) aktiviert wird und die dritte Verarbeitung gemäß dem zweiten Programm (115) abgeschlossen wurde, einen ersten Bildschirm, der eine erste Schaltfläche und eine zweite Schaltfläche enthält, anzuzeigen, und
in einem Fall, in dem das zweite Programm (115) ohne Ausführen der Aktivierungsanweisung gemäß dem ersten Programm (114) aktiviert wird und die dritte Verarbeitung gemäß dem zweiten Programm (115) abgeschlossen wurde, einen zweiten Bildschirm, der die erste Schaltfläche enthält, jedoch die zweite Schaltfläche nicht enthält, anzuzeigen,
wobei basierend auf einer Betätigung der ersten Schaltfläche die Verarbeitung zum Anzeigen eines vorbestimmten Bildschirms und die Verarbeitung zum Schließen des zweiten Programms (115) gemäß dem zweiten Programm (115) ausgeführt werden, und
basierend auf einer Betätigung der zweiten Schaltfläche die Verarbeitung zum Schließen des zweiten Programms (115) gemäß dem zweiten Programm (115) ausgeführt wird, ohne dass die Verarbeitung zum Anzeigen des vorbestimmten Bildschirms gemäß dem zweiten Programm (115) ausgeführt wird.

11. Das erste Programm (114) und das zweite Programm (115) nach Anspruch 10, wobei
der vorbestimmte Bildschirm wenigstens ein Bildschirm unter einem Bildschirm in Bezug auf ein Verfahren zum Verwenden des ersten Programms (114), einem Bildschirm in Bezug auf ein Verfahren zum Verwenden einer Vorrichtung außerhalb der Informationsverarbeitungsvorrichtung (101), einem Bildschirm zum Vorstellen eines Produkts, das ein Anbieter des ersten Programms (114) bereitstellt, einem Bildschirm einer Werbung in Bezug auf das erste Programm (114) und einem Bildschirm einer Werbung in Bezug auf eine Vorrichtung außerhalb der Informationsverarbeitungsvorrichtung (101) ist, und
der vorbestimmte Bildschirm ein Bildschirm ist, der durch einen Webbrowser oder das erste Programm (114) angezeigt werden soll.

12. Das erste Programm (114) und das zweite Programm (115) nach einem der Ansprüche 1 bis 11, wobei das erste Programm (114) und das zweite Programm (115) Anwendungsprogramme sind.

13. Das erste Programm (114) und das zweite Programm (115) nach einem der Ansprüche 1 bis 12, ferner dazu eingerichtet, den Computer zu veranlassen:
gemäß dem ersten Programm (114) wenigstens einen Auftrag unter einem Druckauftrag zum Veranlassen einer Vorrichtung außerhalb der Informationsverarbeitungsvorrichtung (101) Drucken auszuführen, und einem Scanauftrag zum Veranlassen einer Vorrichtung außerhalb der Informationsverarbeitungsvorrichtung (101) Scannen auszuführen, zu übertragen.

14. Eine Informationsverarbeitungsvorrichtung (101) mit einem ersten Programm (114) und einem zweiten Programm (115), wobei die Informationsverarbeitungsvorrichtung (101) umfasst:
wenigstens einen Speicher und wenigstens einen Prozessor, die fungieren als:
eine erste Ausführungseinrichtung, die dazu eingerichtet ist, gemäß dem ersten Programm (114) eine erste Verarbeitung zum Einholen der Zustimmung zu einer Softwarelizenzvereinbarung bezüglich des zweiten Programms (115) von einem Benutzer auszuführen;
eine Aktivierungseinrichtung, die dazu eingerichtet ist, von dem ersten Programm (114) aus das zweite Programm (115) durch Ausführen einer Aktivierungsanweisung gemäß dem ersten Programm (114) zu aktivieren, nachdem die Zustimmung zu der Softwarelizenzvereinbarung bezüglich des zweiten Programms (115) durch Ausführen der ersten Verarbeitung eingeholt wurde; und
eine zweite Ausführungseinrichtung, die dazu eingerichtet ist, basierend darauf, dass das zweite Programm (115) durch Ausführen der Aktivierungsanweisung gemäß dem ersten Programm (114) aktiviert wurde, gemäß dem zweiten Programm (115) eine zweite Verarbeitung zum Einholen der Zustimmung zu der Softwarelizenzvereinbarung bezüglich des zweiten Programms (115) nicht auszuführen, und basierend darauf, dass das zweite Programm (115) ohne Ausführen der Aktivierungsanweisung gemäß dem ersten Programm (114) aktiviert wurde, gemäß dem zweiten Programm (115) die zweite Verarbeitung auszuführen.

15. Verfahren zum Steuern einer Informationsverarbeitungsvorrichtung (101) mit einem ersten Programm (114) und einem zweiten Programm (115), wobei das Steuerverfahren umfasst:
Ausführen, gemäß dem ersten Programm (114), einer ersten Verarbeitung zum Einholen einer Zustimmung zu einer Softwarelizenzvereinbarung bezüglich des zweiten Programms (115) von einem Benutzer;
Aktivieren, von dem ersten Programm (114) aus, des zweiten Programms (115) durch Ausführen einer Aktivierungsanweisung gemäß dem ersten Programm (114), nachdem die Zustimmung zu der Softwarelizenzvereinbarung bezüglich des zweiten Programms (115) durch Ausführen der ersten Verarbeitung eingeholt wurde; und
basierend darauf, dass das zweite Programm (115) durch Ausführen der Aktivierungsanweisung gemäß dem ersten Programm (114) aktiviert wurde, gemäß dem zweiten Programm (115) eine zweite Verarbeitung zum Einholen der Zustimmung zu der Softwarelizenzvereinbarung bezüglich des zweiten Programms (115) von einem Benutzer nicht auszuführen, und basierend darauf, dass das zweite Programm (115) ohne Ausführen der Aktivierungsanweisung gemäß dem ersten Programm (114) aktiviert wurde, gemäß dem zweiten Programm (115) die zweite Verarbeitung auszuführen.

## Revendications

1. Un premier programme (114) et un deuxième programme (115) différent du premier programme (114) configurés pour faire effectuer par un ordinateur les opérations suivantes :
si le deuxième programme (115) est activé en exécutant une instruction d'activation selon le premier programme (114), ne pas exécuter, selon le deuxième programme (115), un deuxième traitement pour acquérir, d'un utilisateur, l'accord d'un contrat de licence de logiciel concernant le deuxième programme (115), et
si le deuxième programme (115) est activé sans exécuter l'instruction d'activation selon le premier programme (114), exécuter, selon le deuxième programme (115), le deuxième traitement ;
exécuter, selon le premier programme (114), un premier traitement pour acquérir, d'un utilisateur, l'accord d'un contrat de licence de logiciel concernant le deuxième programme (115) ; et
activer, depuis le premier programme (114), le deuxième programme (115) en exécutant une instruction d'activation selon le premier programme (114) après que l'accord du contrat de licence de logiciel concernant le deuxième programme (115) a été acquis par le premier traitement en cours d'exécution.

2. Premier programme (114) et deuxième programme (115) selon la revendication 1, dans lequel le premier traitement comprend en outre un traitement pour acquérir, d'un utilisateur, l'accord d'un contrat de licence de logiciel concernant le premier programme (114).

3. Premier programme (114) et deuxième programme (115) selon la revendication 1 ou 2, dans lequel le deuxième traitement comprend en outre un traitement pour acquérir, d'un utilisateur, l'accord d'un contrat de licence de logiciel concernant le premier programme (114).

4. Premier programme (114) et deuxième programme (115) selon l'une quelconque des revendications 1 à 3, dans lequel le contrat de licence de logiciel est un contrat de licence d'utilisateur final (CLUF).

5. Premier programme (114) et deuxième programme (115) selon l'une quelconque des revendications 1 à 3, dans lequel :
si le deuxième programme (115) est activé par l'exécution d'une instruction d'activation selon le premier programme (114), le deuxième traitement n'est pas exécuté selon le deuxième programme (115) et un troisième traitement est exécuté selon le deuxième programme (115), et
si le deuxième programme (115) est activé sans l'exécution de l'instruction d'activation selon le premier programme (114), le deuxième traitement et le troisième traitement sont exécutés selon le deuxième programme (115).

6. Premier programme (114) et deuxième programme (115) selon la revendication 5, dans lequel le troisième traitement comprend un traitement de recherche pour chercher un ou plusieurs appareils appartenant au même réseau qu'un réseau auquel appartient un appareil de traitement d'informations (101) et un traitement d'affichage pour afficher un ou plusieurs appareils découverts par le traitement de recherche.

7. Premier programme (114) et deuxième programme (115) selon la revendication 6, configurés en outre pour faire effectuer par l'ordinateur les opérations suivantes :
exécuter, selon le deuxième programme (115), un traitement pour réaliser une commande telle que, dans le cas où le deuxième programme (115) s'est activé par l'exécution d'une instruction d'activation selon le premier programme (114), un ou plusieurs appareils qui sont d'un modèle qui n'est pas compatible avec le premier programme (114), parmi un ou plusieurs appareils appartenant au même réseau qu'un réseau auquel appartient l'appareil de traitement d'informations (101), ne sont pas affichés par le traitement d'affichage, et un ou plusieurs appareils d'un modèle qui est compatible avec le premier programme (114), parmi lesdits un ou plusieurs appareils appartenant au même réseau que le réseau auquel appartient l'appareil de traitement d'informations (101), sont affichés par le traitement d'affichage, et
exécuter, selon le deuxième programme (115), un traitement pour réaliser une commande telle que, dans le cas où le deuxième programme (115) s'est activé sans l'exécution d'une instruction d'activation selon le premier programme (114), un ou plusieurs appareils qui sont d'un modèle qui n'est pas compatible avec le deuxième programme (115), parmi un ou plusieurs appareils appartenant au même réseau qu'un réseau auquel appartient l'appareil de traitement d'informations (101), ne sont pas affichés par le traitement d'affichage, et un ou plusieurs appareils d'un modèle qui est compatible avec le deuxième programme (115), parmi lesdits un ou plusieurs appareils appartenant au même réseau que le réseau auquel appartient l'appareil de traitement d'informations (101), sont affichés par le traitement d'affichage,
dans lequel une gamme de modèles qui sont compatibles avec le premier programme (114) et une gamme de modèles qui sont compatibles avec le deuxième programme (115) sont différentes.

8. Premier programme (114) et deuxième programme (115) selon la revendication 6 ou 7, configurés en outre pour faire effectuer par l'ordinateur les opérations suivantes :
exécuter, selon le deuxième programme (115), un traitement lié à une connexion entre un appareil sélectionné par un utilisateur parmi lesdits un ou plusieurs appareils affichés par le traitement d'affichage et l'appareil de traitement d'informations (101).

9. Premier programme (114) et deuxième programme (115) selon l'une quelconque des revendications 6 à 8, dans lequel lesdits un ou plusieurs appareils affichés par le traitement d'affichage sont des imprimantes.

10. Premier programme (114) et deuxième programme (115) selon l'une quelconque des revendications 5 à 9, configurés en outre pour faire effectuer par l'ordinateur les opérations suivantes :
dans le cas où le deuxième programme (115) s'active par l'exécution de l'instruction d'activation selon le premier programme (114) et où le troisième traitement a été achevé selon le deuxième programme (115), afficher un premier écran comportant un premier bouton et un deuxième bouton, et
dans le cas où le deuxième programme (115) s'active sans exécuter l'instruction d'activation selon le premier programme (114) et où le troisième traitement a été achevé selon le deuxième programme (115), afficher un deuxième écran comportant le premier bouton mais ne comportant pas le deuxième bouton,
dans lequel, si le premier bouton est actionné, le traitement pour afficher l'écran prédéterminé et le traitement pour fermer le deuxième programme (115) est exécuté selon le deuxième programme (115), et
si le deuxième bouton est actionné, le traitement pour fermer le deuxième programme (115) est exécuté selon le deuxième programme (115) sans que le traitement pour afficher l'écran prédéterminé soit exécuté selon le deuxième programme (115).

11. Premier programme (114) et deuxième programme (115) selon la revendication 10, dans lequel :
l'écran prédéterminé est au moins un écran parmi un écran lié à un procédé pour utiliser le premier programme (114), un écran lié à un procédé pour utiliser un appareil extérieur à l'appareil de traitement d'informations (101), un écran pour présenter un produit qu'un fournisseur du premier programme (114) fournit, un écran d'une publicité liée au premier programme (114), et un écran d'une publicité liée à un appareil extérieur à l'appareil de traitement d'informations (101), et
l'écran prédéterminé est un écran destiné à être affiché par un navigateur Web ou le premier programme (114).

12. Premier programme (114) et deuxième programme (115) selon l'une quelconque des revendications 1 à 11, dans lequel le premier programme (114) et le deuxième programme (115) sont des programmes d'application.

13. Premier programme (114) et deuxième programme (115) selon l'une quelconque des revendications 1 à 12, configurés en outre pour faire transmettre par l'ordinateur, selon le premier programme (114), au moins une tâche parmi un travail d'impression pour faire exécuter une impression par un appareil extérieur à l'appareil de traitement d'informations (101) et un travail de numérisation pour faire exécuter une numérisation par un appareil extérieur à l'appareil de traitement d'informations (101).

14. Appareil de traitement d'informations (101) comportant un premier programme (114) et un deuxième programme (115), l'appareil de traitement d'informations (101) comprenant :
au moins une mémoire et au moins un processeur qui fonctionnent en tant que :
premier moyen d'exécution configuré pour exécuter, selon le premier programme (114), un premier traitement pour acquérir, d'un utilisateur, l'accord d'un contrat de licence de logiciel concernant le deuxième programme (115) ;
moyen d'activation configuré pour activer, depuis le premier programme (114), le deuxième programme (115) en exécutant une instruction d'activation selon le premier programme (114) après que l'accord du contrat de licence de logiciel concernant le deuxième programme (115) a été acquis par le premier traitement en cours d'exécution ; et
deuxième moyen d'exécution configuré pour, si le deuxième programme (115) est activé par l'exécution de l'instruction d'activation selon le premier programme (114), ne pas exécuter, selon le deuxième programme (115), le deuxième traitement pour acquérir, d'un utilisateur, l'accord du contrat de licence de logiciel concernant le deuxième programme (115), et, si le deuxième programme (115) est activé sans exécuter l'instruction d'activation par le premier programme (114), exécuter, selon le deuxième programme (115), le deuxième traitement.

15. Procédé pour commander un appareil de traitement d'informations (101) comportant un premier programme (114) et un deuxième programme (115), le procédé comprenant les étapes suivantes :
exécuter, selon le premier programme (114), un premier traitement pour acquérir, d'un utilisateur, l'accord d'un contrat de licence de logiciel concernant le deuxième programme (115) ;
activer, depuis le premier programme (114), le deuxième programme (115) en exécutant une instruction d'activation selon le premier programme (114) après que l'accord du contrat de licence de logiciel concernant le deuxième programme (115) a été acquis par le premier traitement en cours d'exécution ; et
si le deuxième programme (115) est activé par l'exécution de l'instruction d'activation selon le premier programme (114), ne pas exécuter, selon le deuxième programme (115), le deuxième traitement pour acquérir, d'un utilisateur, l'accord du contrat de licence de logiciel concernant le deuxième programme (115), et, si le deuxième programme (115) est activé sans exécuter l'instruction d'activation par le premier programme (114), exécuter, selon le deuxième programme (115), le deuxième traitement.
